# EUROPEAN PATENT SPECIFICATION

(11) **EP 2 041 959 B1**
(45) Date of publication and mention of the grant of the patent: **31.05.2017**
(21) Application number: 07733420.9
(22) Date of filing: 29.06.2007
(51) Int. Cl.: H04H 20/42, H04H 60/27, H04H 60/72, H04N 5/445, H04N 21/414, H04N 21/433, H04N 21/434, H04N 21/4385, H04N 21/442, H04N 21/458, H04N 21/462, H04N 21/482, H04N 21/488, H04N 21/83

(54) **ELECTRONIC PROGRAMME GUIDE FOR A MOBILE COMMUNICATIONS DEVICE**
ELEKTRONISCHER PROGRAMMFÜHRER FÜR EIN MOBILES KOMMUNIKATIONSGERÄT
GUIDE DE PROGRAMMES ELECTRONIQUE POUR DISPOSITIF DE COMMUNICATIONS MOBILE

(30) Priority: 13.07.2006 GB 0613946
(43) Date of publication of application: 01.04.2009
(73) Proprietor: BRITISH TELECOMMUNICATIONS public limited company, London EC1A 7AJ (GB)
(72) Inventor: ORRELL, Martin, Hertfordshire SG8 6EE (GB); RIX, Antony, Hertfordshire SG8 6EE (GB); GEORGE, Ian, Hertfordshire SG8 6EE (GB)
(74) Representative: Tuckett, William John
(86) International application number: PCT/GB2007/002439
(87) International publication number: WO 2008/007047

(56) References cited:
- EP-A- 1 049 278
- WO-A-97/13336
- WO-A2-02/13058
- US-A1- 2002 124 041
- US-A1- 2003 014 753
- US-B1- 6 799 208

## Description

The present invention relates to an electronic programme guide for a mobile communications device arranged to play and display digitally broadcast audio and video signals. The signals are partially decoded by receiver circuitry controlled by a receiver application supported by the operating system of the mobile communications device.

The invention in particular, but not exclusively, relates to an electronic programme guide for a mobile communications device having a receiver for the reception of digitally broadcast signals for data and/or audio and/or video, in particular, but not exclusively, a receiver application for receiving a multiplex of digital audio broadcast (DAB) sub-channels from receiver circuitry. The DAB receiver application is arranged to selectively decode one or more sub-channels from the received multiplex using resources shared with the operating system of the mobile communications device.

Currently, several standards exist for digital broadcast technologies, and those of ordinary skill in the art will be aware that known standards for digital broadcast to mobile devices include digital audio broadcast (DAB)/digital media broadcast (DMB), digital video broadcast (DVB) (e.g. DVB-H), and Media Flo. Digital Audio Broadcast (DAB) is a standard for broadcasting digital audio signals and video signals. The standards for digital video broadcast (DVB) signals differ slightly from the standards for DAB signals which also carry video content. There are two well-known techniques for broadcasting video using the DAB standards. One is the Digital Multimedia Broadcast standard (DMB) and the other is the "Motion PAD" (M-PAD) which essentially supplements the DAB audio programme. A particular DMB standard is T-DMB, which uses H264/AAC or H264/BSAC encoded video/audio carried over an MPEG-2 transport stream; another is DAB IP multicast.

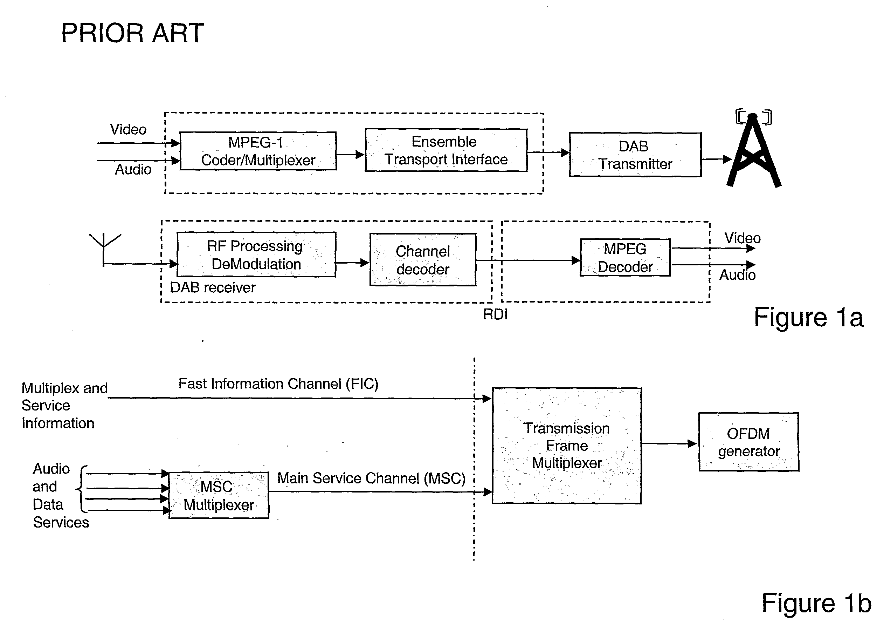

In Figure 1A of the accompanying drawings, a DMB system providing broadcast digital television based on the DAB transport mechanisms is shown. In early DMB standards, the video and audio source signals were source coded according to the MPEG-1 standard using target bit rates in the range from 1.2 up to 1.5 Mbit/s adapted to the Ensemble Transport Interface (ETI) and provided directly to the DAB ensemble multiplexer/modulator. Each DAB ensemble carried a MPEG-1 bit-stream within its payload capacity of about 1.5Mbit/s (depending on the code rate). Currently, MPEG-2 is standard, and this may change in future to other standards, for example the standards known to those of ordinary skill in the art as MPEG-4. On the receiving side, a standard DAB receiver is used for channel decoding up to a full-rate serial data interface Receiver Data Interface (RDI). The RDI data stream is then output to an MPEG-1 decoder which outputs the audio and video signals for presentation. Digitally broadcast signals are currently broadcast in the form of time-division multiplexed (TDM) data streams at specified frequencies. Each multiplex at a particular frequency comprises a number of sub-channels which occupy designated slots in that TDM stream.

The generation of a DAB multiplex is shown schematically in Figure 1B of the accompanying drawings. Data for audio and video components and other applications such as an electronic programme guide are carried in a Main Service Channel (MSC). Multiplex and service-related information is carried in a Fast Information Channel (FIC). At predetermined intervals (e.g., every 24ms), the data of all applications are gathered in sequences referred to as "Common Interleaved Frames (CIFs), and FIC data is combined into Fast Information Blocks (FIBs). A number of CIFs and FIBs are grouped together into one DAB transmission frame which is then mapped to a number of OFDM systems.

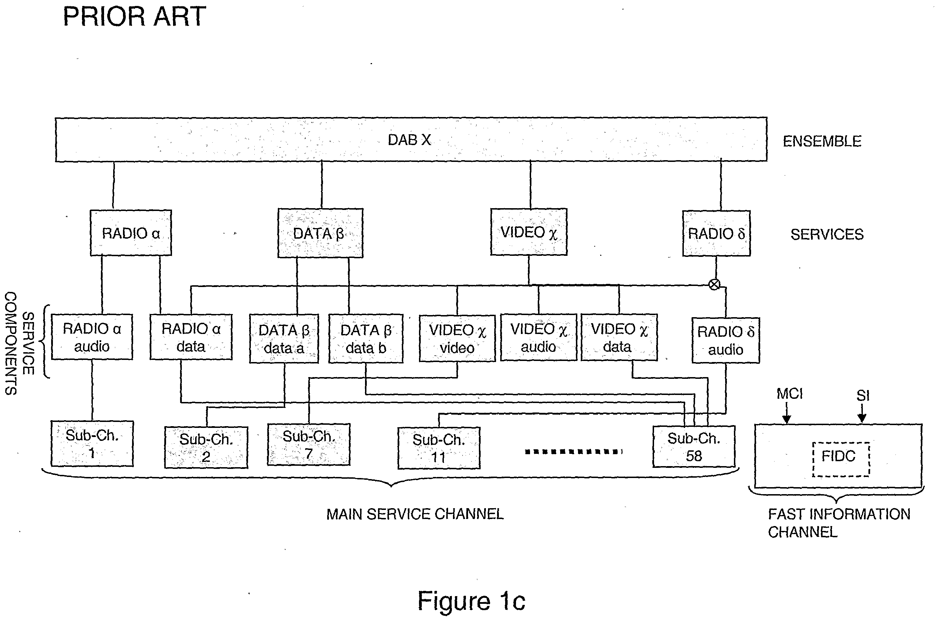

The MSC of the DAB system is divided into sub-channels, each carrying convolutionally encoded and time-interleaved data. Each sub-channel can be organised into a stream or packet mode. The term "Multiplex" configuration refers to the division of the MSC into sub-channels and the individual coding profiles of each sub-channel. The configuration can vary for different DAB transmissions or from time-to-time for the same transmission. To decode the multiplex configuration, signalling information is provided by the FIC to the DAB receivers. The FIC is used to signal the multiplex configuration of a DAB transmission and uses fixed symbols in the DAB transmission frame and a DAB receiver must be preconfigured with this information to decode any of the sub-channels. Figure 1c shows a logical structure of a DAB multiplex.

A DAB service comprises a plurality of the different data streams in a DAB multiplex which are grouped together. Each DAB service can be labelled (e.g., Sky One™ or BBC One™ (British television channels)), and the labels attached to a DAB service inform the user of a DAB device so that they can select a service channel. A DAB ensemble comprises a number of services which are taken together as a package. Each service comprises a number of service components, each service component comprising a different data stream for that service.

Different services may share components and the logical structure of services, service components and the position in the CIF (Common Interleaved Frame) where the data components are carried are signalled as part of the MCI in the FIC. Figure 1c shows an exemplary DAB ensemble DAB X comprising a number of services, Radio α, Data β, Video χ, and Radio δ. Radio δ is a service comprising only an audio component. Radio α comprises both an audio component and a data component. Video χ comprises an audio component, a video component and a data component. Data β comprises two different data streams data "a" and data "b". Radio α data, Data βb, and Video χ data all share the same data sub-channel, i.e., the same data component. Different data components (Radio α data and Data β data b) share a packet mode sub-channel. Different stream mode components each have an individual sub-channel. The FIC provides information on the sizes and positions of the sub-channels in the CIF and their respective code rates. This information is provided by Multiplex Configuration Information (MCI) as defined in the DAB standards and Service Information which provides service labels and programme type codes as defined in the standards. Further information about each service, such as service label, programme type, programme number for recorder control, indications of announcements, alternative frequencies, etc., can all be provided using data channels under the DAB system. For further background information on DAB technology, the reader is referred to Digital Audio Broadcasting, Principles and Applications of Digital Radio, Edited by Wolfgang Hoeg and Thomas Lauterbach, 2nd Edition, Wiley, 2003, ISBN 0-470-85013-2, the contents of which are hereby incorporated by reference.

In a DAB system, therefore, a service entertainment channel (such as British television channel Sky One™ or BBC One™, for example) will comprise a number of service components and occupy one or more designated sub-channels on a designated multiplex. In general, to ensure spectral efficiency, a provider of a service channel will multiplex a number of service channels together with the programme guide information together into an ensemble. Prior to transmission a number of encoding techniques are implemented on the individual sub-channels and/or multiplexed signal, as are well known in the art. For example, signals may be encrypted to restrict content so it is viewable only by registered subscribers, and are usually encoded the broadcast signal prior to transmission to enhance reception (i.e., to improve error detection/correction) by the receiver.

Conventional DAB receiver equipment has specific processing power and other resource requirements. Decoding equipment needs to firstly decode the received signals to detect/correct any errors in the received signal. Secondly, the content sub-channels (audio and video entertainment channels and the programme guide channel) must be located in the multiplexed stream and decoded. Finally, any encoded audio and/or video entertainment channels must be decoded so that their content can be played.

The amount of processing power required to fully decode a number of channels is sufficiently high for a prejudice to exist in the mobile communications equipment field for channel decoders to be hardwired into the DAB circuitry; so that the battery power consumption is minimised. This prolongs the amount of time the mobile communications equipment can be used. DAB equipment which has access to a power supply (for example, such as a computer slot-in card or in a satellite, cable, for free-to-view television set-top box, or a dedicated DAB radio) does not suffer from the same constraints on power consumption, weight, or physical size imposed by the mobile communications device environment.

DAB receivers for mobile communications devices are known to be provided as DAB receiver modules or chipsets with decoders having a non-reconfigurable form, e.g. they are hardwired into the DAB module. DAB receiver circuitry (i.e., a DAB module) generally outputs a single decoded DAB audio and/or video sub-channel comprising entertainment content and/or a data sub-channel which comprises electronic program guide information (EPG) information. In the mobile communications field, therefore, a problem exists if a certain change is made to a coding protocol for a DAB signal, as the DAB receiver will require reconfiguring or replacement to have the ability to decode any signals conforming to the new protocol.

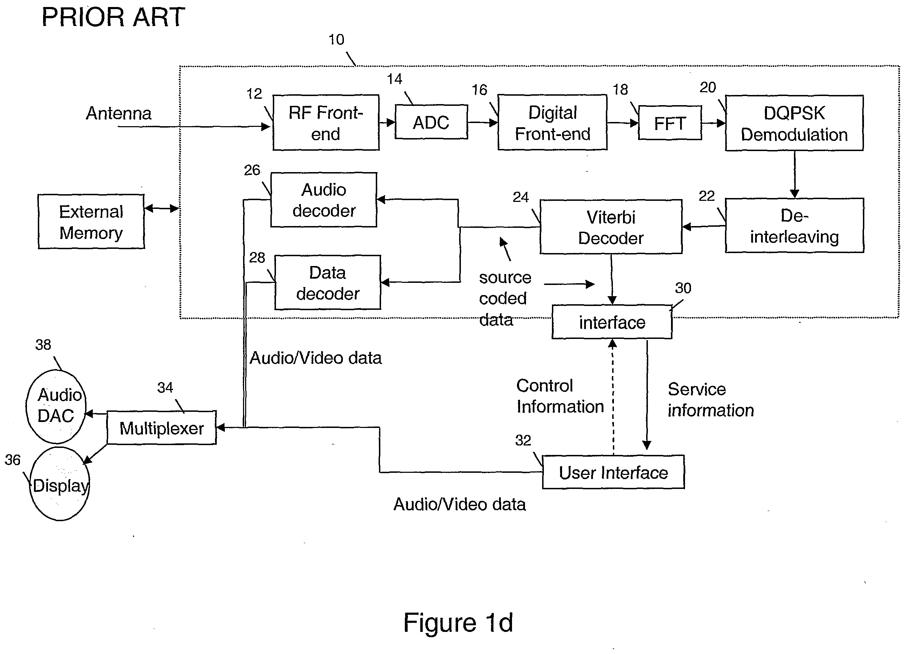

Figure 1d of the accompanying drawings shows an exemplary DAB receiver module 10 of a type well known in the art. The DAB protocols signals are broadcast from a remote head-end (not shown in Figure 1 d), and are received by an antenna mounted on the end-user's receiver equipment. The DAB receiver module receives power and utilises dedicated memory provided off the DAB module. Signals are received by the radio frequency front end 12 of the DAB module 10, converted from analogue to digital form by an ADC 14 and processed by a digital front end (16) before being subject to a fast fourier transform FFT 18 and suitably demodulated (e.g. by a DQPSK demodulator 20). The interleaved signals are then de-interleaved using a suitable de-interleaver means 22. A decoder (shown as Viterbi decoder 24 in Figure 1c) is used to decode the signals from the transmitted frame format.

As mentioned above, each received DAB multiplex signal includes a fast information channel (FIC), which provides sufficient signalling information through interface 30 to a user interface 32 to enable a subsequent selection by a user of a DAB service through user interface 32. The control information generated by the user interface is returned via an interface 30 and used to select a service for subsequent decoding. As shown in Figure 1c, a single selected audio and/or a data sub-channel are decoded using an audio decoder 26 and a data decoder 28 on the DAB receiver module (which may, for example, be provided as a DAB chipset). The data decoder enables the DAB module to deliver electronic programme guide information.

The data and/or audio decoders output audio and/or video data via a suitable interface which is multiplexed together using suitable means 34 to provide a signal to video reproduction means (e.g. a display) 36 and/or audio reproduction means (e.g. loudspeakers/audio jack) 38. A control interface 30 is provided to the DAB module to enable control and service information to be exchanged between the DAB module and user interface 32 of the device the DAB module is contained within.

The DAB receiver module 10 shown in Figure 1 has certain limitations if used in a mobile communications environment, i.e., if a receiver of this type were to be provided within a mobile communications handset. For example, if the DAB protocol recognised by the audio and/or data decoder changes subsequent to the device being shipped out of the manufacturing environment. In such circumstances, the displayed video channel and/or the played audio channel may not be decoded by the hardware/firmware. This means the handset would not be capable of displaying and/or playing certain features of signals conforming to the new protocol (and may not even be able to play/display such signals at all). The DAB receiving equipment needs to be replaced with new equipment capable of receiving and processing the new signal protocols to obtain the additional features of the new protocols.

Whilst this is simple to do where the DAB receiver is provided in a set-top box environment or as a computer slot in module, in the mobile communications environment constraints of size, power, battery-life, etc., have resulted in DAB receivers being provided as a chipset built into the mobile communications platform. In such circumstances, to upgrade the DAB receiver of a mobile communications handset, the users of the mobile communications handset must acquire a new handset with the new DAB receiver built in. This might not be possible if the user is constrained by a service contract to retain their communications device until either offered an upgrade under their existing contract or until the minimum term of their contracts expires.

Another limitation of known mobile communications devices is that as the DAB directly outputs audio/video services in a form suitable for display on the user's device, any displayed DAB video is rendered separately from video generated by the mobile communications operating system's user interface, for example. This can result in the displayed characteristics of the DAB video elements differing from those of mobile communications user interface elements, i.e., a different "look and feel" is provided, preventing an integrally rendered display for both the user interface and the DAB content.

One object of the invention seeks to mitigate and/or obviate the limitations known in the art for the processing of electronic programme guide information to enable this information to be displayed more rapidly when requested by a user, and to enable the electronic programme guide to be updated in a manner which utilises the resources of a mobile communications device more efficiently.

WO021358 discloses a method for broadcasting data using wireless communication in which the data is extracted from a source SQL database and broadcast to a receiving device, for example a car radio, programmed to reconstruct the data into a SQL database.

US2003014753 describes an interactive network-based personal video recording system in which a user interface is provided that allows views to search a database of program guide information according to program title, indexed program attributes such as actor and director and key words.

### SUMMARY STATEMENTS OF THE INVENTION

The aspects of the invention and preferred embodiments are as set out in the accompanying independent and dependent claims respectively, and may be combined in any appropriate manner known to those of ordinary skill in the art.

A first aspect of the invention comprises a method of processing data received from a digital broadcast receiver to generate an electronic programme guide for the content of a plurality of service channels received by said receiver, the method comprising:
i) processing a sub-channel providing electronic programme guide data, the data comprising a plurality of files, each file comprising a sequential listing of electronic programme information for a plurality of programmes of an individual service-channel which are scheduled for broadcast within a predetermined period of time, the processing step being arranged to extract data from each said file indicating for each of said plurality of programmes at least one informational element comprising a characteristic of said programme;
ii) generating a data record for each individual programme, the data record having a structure which includes at least one said informational element as a searchable index enabling subsequent retrieval of said information;
iii) storing each said data record received in a data store, wherein said data store is configured to be searchable using said one or more indices.

In one embodiment, the method further comprises the steps of:
automatically re-indexing information provided collectively for all programmes listed in each received file, and
generating for each programme record, one or more information elements derived from said re-indexed information comprising an individual programme characteristic.

In one embodiment, the method further comprises the step of collating data records for a plurality of different service components to generate an electronic programme guide for a digitally broadcast textual and/or audio and/or video content distribution system.

In one embodiment, said digitally broadcast content comprises live-content whose broadcast conforms to a Digital Audio Broadcast (DAB) standard protocol.

In one embodiment, said digitally broadcast content comprises archived-content whose broadcast conforms to a Digital Audio Broadcast (DAB) standard protocol.

In one embodiment, said method is implemented by an application supported by an operating system of a mobile communications device, the application being arranged to receive a plurality of sub-channels from digital audio broadcast receiver circuitry, and wherein said data store utilises a resource shared with other applications running on said operating system.

In one embodiment, the method further comprises the steps of:
each time a new electronic programme guide information file is downloaded, a check is performed to determine if a data record has been already generated containing the same information elements for a programme.

In one embodiment, if a record already exists with the same information element, the previous record is not overwritten and the processing for that data record terminates, and the processing of the next programme in the file commences.

In one embodiment, said processing steps are performed by a remotely reconfigurable DAB application arranged to control the operation of said DAB receiver hardware so as to selectively tune said DAB receiver hardware to a DAB multiplex carrying said electronic programme guide information in a sub-channel.

In one embodiment, said electronic programme guide is re-generated to show data records selected in accordance with one or more user-selected search criteria.

In one embodiment, said data store is configured to be searchable using one or more indices which conform to one or more user-selected criteria inputted via a user-interface of the mobile communications device.

Another aspect of the invention seeks to provide a device comprising means arranged to implement steps according to any method aspect of the invention.

Another aspect seeks to provide a mobile communications device comprising means arranged to implement steps in any method aspect.

Another aspect seeks to provide a suite of one or more computer programmes, arranged to implement an application supported by the operating system of a mobile communications device which performs steps in any method aspect.

Another aspect seeks to provide a signal comprising instructions which are capable of being installed by the operating system of a mobile communications device to generate an application comprising a suite of one or more computer programmes which reconfigure the mobile communications device to perform steps in any method aspect.

The invention thus enables electronic programme guide information to be pre-processed by the mobile communications device prior to display. It also enables electronic programme guide information to be updated more rapidly. In particular, one embodiment enables a background update of EPG information relating to other un-decoded channels received by the DAB application in a multiplex from the DAB receiver hardware whilst a user-selected service channel is decoded by the DAB application for display on the mobile communications device.

### LIST OF FIGURES

Embodiments of the invention will now be described with reference to the accompanying drawings which are by way of example only and in which:
Figure 1a is a functional block diagram of a DAB system known in the art;
Figure 1a is a functional block diagram showing the generation of a DAB multiplex as known in the art;
Figure 1c shows a functional block diagram of an exemplary DAB ensemble as known in the art;
Figure 1d shows a functional block diagram of a DAB receiver known in the art;
Figure 2a shows a functional block diagram of a mobile communications device having a receiver application according to one embodiment of the invention;
Figure 2b shows a functional block diagram of a mobile communications device having a receiver application according to another embodiment of the invention;
Figure 3 shows in more detail the functional processes of the receiver application according to an embodiment of the invention;
Figure 4a is a schematic diagram showing certain steps performed in a method of receiving digitally broadcast sub-channels according to an embodiment of the invention;
Figure 4b is a schematic diagram showing certain steps performed in a method of receiving digitally broadcast sub-channels according to another embodiment of the invention;
Figure 5 is a schematic diagram showing steps in a method of configuring a receiver application of a mobile communications platform according to another embodiment of the invention;
Figures 6A to 6C are schematic diagrams showing alternative schemes for downloading receiver application components for installation on a mobile communications device according to various embodiments of the invention; and
Figure 7 shows how electronic programme guide information is processed according to an embodiment of the invention.

### DETAILED DESCRIPTION

The best mode of the invention currently contemplated by the inventor will now be described with reference to the accompanying drawings. Features which are well known in the art in the context of the invention may be omitted from the description entirely or not described in explicit detail herein. Where omitted from the description, further detail can be obtained from BS EN 50248:2001: Characteristics of DAB receivers, and ETSI EN 300 401 V1.3.3 (2001-05): Digital Audio Broadcasting (DAB) to mobile, portable, and fixed receivers, the final draft of ETSI EN 301 234 V2.1.1(2005-02): Digital Audio Broadcasting (DAB); Multimedia Object Transfer (MOT) protocol; ETSI ES 201 735 V1.1.1 (2000-09):Digital Audio Broadcasting (DAB); Internet Protocol (IP) datagram tunnelling; IETF RFC 791(1981): "Internet Protocol (IP); Darpa Internet Program; Protocol Specification" J. Postel, IETF: RFC 2616 (1999-06): Hypertext Transfer Protocol - HTTP/1.1; Draft file ETSI_TS_Enhanced packet mode 21_11_04.doc: Digital Audio Broadcasting (DAB); Enhanced Packet mode; ETSI TS 101 756 V1.1.1 (2000-10): Digital Audio Broadcasting (DAB); Registered Tables; ETSI TS 102 818 V1.2.1(2005-01): Digital Audio Broadcasting (DAB); XML Specification for DAB Electronic Programme Guide (EPG); ETSI TS 102 371 V1.1.1. (2005-01) Digital Audio Broadcasting (DAB) Transportation and Binary Encoding Specification for DAB Electronic Programme Guide; and Digital Audio Broadcasting (DAB); and Multimedia Object Transfer (MOT) protocol ETSI EN 301 234.
Also specified in the DAB standards are certain command sets for receivers, for example, British Standard EN 50320:2001 describes a get_receiver_capability which allows a DAB controller to ask the DAB receiver for its capabilities, and a notify_receiver_capabilties command which enables the DAB receiver to provide its capabilities to the controller. British Standard EN 62105:2002 "Digital Audio Broadcasting System - Specification of the Receiver Data Interface" describes the interface between devices such as dedicated decoders for data applications, computers, audio post-processing and recording devices and the DAB receiver. This standard defines a DAB RDI as capable of carrying the full information obtained by the DAB receiver, i.e., the maximum data rate of the MSC, plus the FIC and information on the received transmitters in a suitable format. It also is capable of carrying data in the format of the output format of recently developed channel decoders and input format of audio source and data decoder ICs (the DAB 3 interface). It is independent of any physical interfaces. It is capable of connecting several decoders to a receiver, to implement a return channel for receiver control from an application terminal, and to connect the DAB receiver to a data network.

The contents of all of the standards listed herein-above and any other standards known to those of ordinary skill in the art as describing technology which can be used to digitally broadcast audio, video and data signals to mobile communications devices are also hereby incorporated into the description.

Where an equivalent element for implementing functionality described herein below is well known in the art, their inclusion in the description is also implicit.

Where the following embodiments of the invention refer explicitly to DAB technology, those skilled in the art will appreciate that the invention may be equivalently implemented for other digital broadcast technology, such as DVB, or Motion-Flo etc.

The invention is implemented on a device in which receiver circuitry is controlled and supplemented by a software application, referred to herein as the receiver application. The receiver application is either pre-installed on a device prior to the device being provided to a consumer or alternatively it may be installed on a device by the consumer, providing the device also has the appropriate receiver circuitry and operating system to support the installation process and operation of the receiver application. In some embodiments, described in more detail hereinbelow, the receiver application may be only partially installed prior to use of the device, and one or more additional components of the application are installed after the user has received the device.

An electronic programme guide of the invention is generated using a number of programme records which are collated within a data store. The programming elements which process received electronic programme information and interface with the data storage are also components of the receiver application, and as such are capable of being remotely configured/reconfigured in the same manner as other components of the receiver application. The device comprises any device having integrated means for wireless communication with a remote server in the best mode of the invention currently contemplated by the inventors.

### COMMUNICATIONS DEVICE

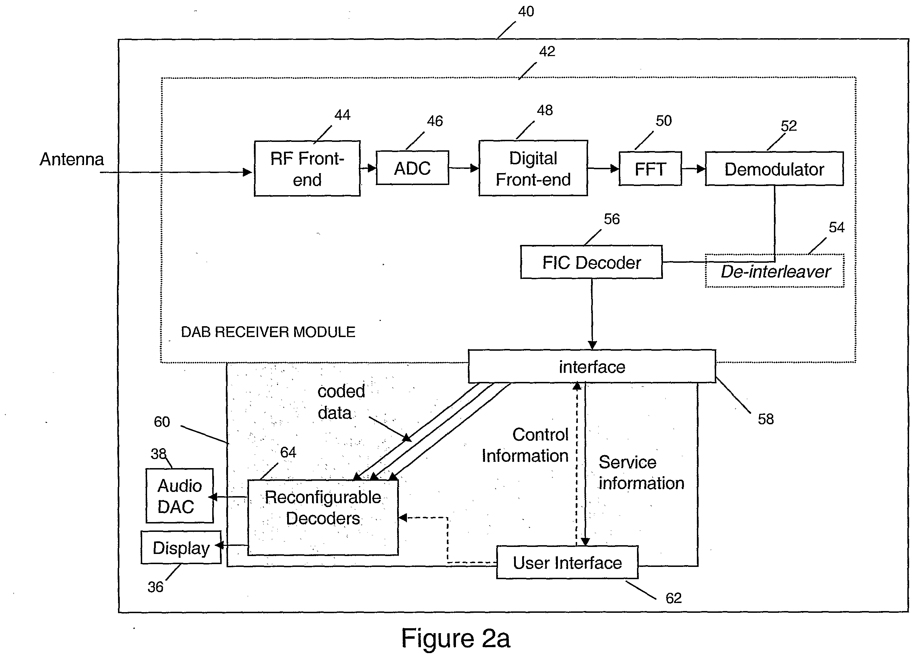

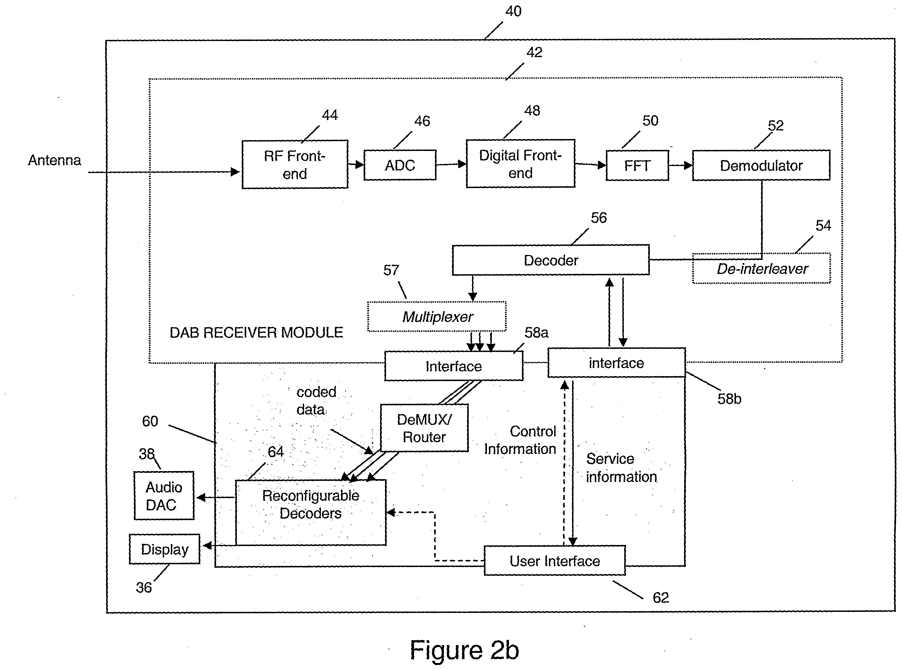

In a preferred embodiment, the communications device is a mobile communications device such as a handset and/or a device capable of being integrated into a land or sea, motorised or unmotorised, vehicle or plane. Figures 2a and 2b of the accompanying drawings provides a schematic functional block diagram of a mobile communications device 40 arranged to receive digitally broadcast signals..

In Figures 2a and 2b, the mobile communications device 40 includes digitally broadcast signal receiving means comprising receiver circuitry, for example a DAB receiver module 42 of a similar type to that shown in Figure 1 and a receiver application 60 which is supported by the operating system (not shown) of the mobile communications device. The receiver application 60 is implemented using reconfigurable means, such as software running on the operating system. The receiver application 60 comprises a number of components which individually or in combination provide functionality which allows a received service channel to be displayed by the mobile communications device 40. U usually the displayed service channel will have been selected by a user of the communications device 40. The receiver application 60 and receiver circuitry 42 are arranged to exchange at least control and signalling information through interface 58 in Figure 2a and through interface 58b in Figure 2b.

In Figures 2a and 2b, the receiver module 42 comprises circuitry providing means to receive a plurality of received signal multiplexes, e.g., DAB signals, and sufficiently decodes each multiplex to extract at least the FIC information (see Figure 1 b). As shown in figures 2a and 2b, where DAB signals are to be received, the receiver module 42 is a DAB receiver module 42 comprising an RF front end 44, and ADC 46, and digital front end 48, an FFT component 50, a demodulator 52, an optional de-interleaver 54, and a convolutional decoder 56, for example, a Viterbi decoder. De-interleaver 54 enables a sub-channel from a DAB multiplex to be output directly to the receiver application, here DAB application 60, via interface 58 in Figure 2a. In Figure 2a, the receiver circuitry of the module enables all sub-channels in a DAB multiplex to be output to a DAB receiver application 60 if required. In practice, this would generate a huge processing load on the receiver application 60. Figure 2b shows an alternative embodiment, in which only a selected number of sub-channels from a received multiplex are output to the receiver application 60, here shown as being received via interface 58a. In this embodiment of the invention, the receiver circuitry includes multiplexing means 57 which multiplexes a subset of the sub-channels received in a DAB signal to which the receiver circuitry is tuned, and this sub-set multiplex is output to the DAB receiver application, which in turn performs a demultiplexing operation prior to routing the extracted sub-channels to other components of the DAB receiver application for further processing/decoding etc.

Although the interfaces between the receiver circuitry and the receiver application supported by the operating system of the mobile communications device are shown separately in Figure 2b and as a single component in Figure 2a, those skilled in the art will appreciate that any appropriate number and configuration of interfaces may be provided in practice.

### DAB RECEIVER CIRCUITRY

The receiver module 42 of Figures 2a and 2b comprise utilise components for a receiver circuitry, whose functionality is already known and as such the components for the receiver modules are not described in great detail herein. In other embodiments of the invention, instead of utilising external memory resources dedicated to the receiver circuitry such as is known in the prior art, the receiver module 42 instead shares some of the memory (and in some embodiments the processing) resources with other software applications arranged to run on the operating system of the mobile communications device 40. This is possible because at least the service channels, i.e., the service components shown in Fig. 1C of a received broadcast signal ensemble are not fully decoded by the receiver module 42, but are instead partially decoded using the receiver application 60.

### DAB EMBODIMENT

Several coding processes may be applied in a DAB broadcast system such as are shown in Figure 1 on page 24 of ETSI EN 300 401 (which is incorporated here specifically by reference) for DAB audio programme services, and all necessary decoding processes to display a service channel on the mobile device 40 must be performed by the receiver circuitry and one or more appropriate components of the receiver application 60. In the preferred embodiment of the invention, the receiver circuitry of the receiver module 42 performs certain decoding processes to extract the FIC from a received DAB signal. The FIC is then provided to a DAB receiver application 60 to enable individual sub-channels in the multiplex which is output by the DAB receiver module 42 to be further decoded by components of the DAB application 60. Any decoding processes performed by the DAB application are capable of being changed by downloading appropriate components to upgrade DAB application 60. Accordingly, it is possible, in some embodiments of the invention, for all decoding processes to be provided by the DAB application. This would be processor intensive, however, and impact the power resources of the mobile communications device 40. Where the DAB application implements any processes normally executed by the DAB receiver circuitry, for example, any de-interleaving functionality, this will reduce the amount of control information which needs to be exchanged through interface 58.

### DAB RECEIVER APPLICATION

In the preferred embodiment shown in Figure 2a, however, the video and /or audio decoding processes and any decryption codes required to access encoded content are implemented by the DAB application 60. This requires the DAB receiver module 42 to signal information extracted from the FIC of a received DAB signal via interface 58 to the DAB application 60. This information then enables the DAB application 60 to identify the sub-channels carrying the various service components for a selected service channel in the MSC of the received DAB signal provided from the DAB receiver module 42 in order for the mobile communications device to generate audio and/or video output for the relevant service channel for consumption by a user.
The DAB application 60 is also arranged to receive information about what multiplex should be selected through user interface 62 which is arranged to enable a user of the mobile communications device 40 to select a service. The user interface 62 then communicates this control information to the DAB receiver module 42 to enable the DAB receiver module 42 to output the selected multiplex to DAB application 60.

The control information received by the DAB receiver module 42 from the user interface is not simply used to determine which service components should have their sub-channels extracted by the DAB receiver module 42 as is known in the art and output in a form capable of immediate playback through a loudspeaker/display. The invention comprises a DAB receiver module 42 which is capable of separating the FIC from the MSC of a received DAB signal and which provides a multiplex of sub-channels to the DAB application 60 together with appropriate signalling information (extracted from the FIC) for use by the DAB application 60 to selectively extract one or more sub-channels from the entire received DAB multiplex. In one embodiment, this enables the control information provided by the DAB application 60 to the DAB receiver module 42 via interface 58 (which is generated in response to user selection input for a particular service channel received via user interface 62) to be reduced to simply selecting which frequency the DAB module needs to tune to receive a particular multiplex carrying the selected service channel.

In the embodiment of the invention shown in Figure 2a, the MSC of each multiplex is provided to the DAB application 60 via interface 58 together with sub-channels to the DAB application 60 and the FIC information. In alternative embodiments of the invention different interfaces may be provided for signalling and control information and the multiplex sub-channels.

As mentioned above, DAB multiplexes are provided at differing frequencies. A multiplex may provide one or more service channels which provide consumable content such as audio and/or video and/or data content. A service channel (e.g., BBC1) comprises one or more service components (e.g., an audio component and/or a video component and/or a data component). Each service component is conveyed using one or more sub-channels in the same multiplex. Each sub-channel conveying audio and/or video content is referred to herein as a bearer sub-channel and a multiplex will comprise one or more bearer sub-channels and zero or more data sub-channels (for example, an electronic programme guide sub-channel).

Thus a bearer sub-channel contains source encoded audio and/or video entertainment content components. The term "entertainment content" is used herein to distinguish programme guide content which provides a description of certain characteristics of the "entertainment content". A television programme or radio show is an example of "entertainment content", and the electronic programme guide data provides descriptive information about the entertainment content such as its start and end time, and optionally further information about the nature of the content. The electronic programme guide aspect of the invention is described in more detail herein below.

In alternative embodiments of the invention (not shown in Figure 2) DAB application 60 is arranged to receive one or more DAB multiplexes from the DAB receiver module 42 (this requires either a DAB receiver module which is capable of being tuned to two or more frequencies for multiplex signal reception or a plurality of modules to be provided).

In an embodiment where the entertainment content of the sub-channels on a received multiplex is still source encoded, the DAB application 60 performs additional decoding processes on one or more of the received sub-channels. The additional decoding processes are performed by reconfigurable decoder(s) 64 of the DAB application. A reconfigurable decoder 64 of the DAB application is capable of being modified by downloading different configuration information. In a preferred embodiment, this is performed using a bi-directional mobile communications link from a remote server.

This enables the DAB application to change the type of decoding operation it performs on signals received from the DAB module. This is useful in a mobile communications environment where a user may not want to return their mobile communications device for updating to receive signals comprising additional features and/or characteristics (e.g., signals conveying service channels which are encoded differently, or which comprise frames or files having a new type of format, or where the video components for display have a new different definition from that which the mobile communications device was originally intending to display). It is also possible to configure one or more components of a DAB application 60 according to the invention to utilise the memory and processing resources of the mobile communications device 40 which are shared with other applications running on the operating system of the mobile communications device and to use these resources to decode the television and/or audio services.
Figure 2b shows an alternative embodiment, in which control information received via interface 58b from the user interface 62 enables selection of a received DAB service. This control information determines which of the plurality of the subchannels already demultiplexed/deinterleaved from the received DAB signal are to be multiplexed for communication across interface 58a. The DAB application 60 will then need to demultiplex the received multiplex of sub-channels, and process them to determine their type in order to arrange for the channels to be appropriately routed to other components of the DAB receiver application, e.g., to DAB bearer channel decoding components and DAB EPG decoding components. In some embodiments, a plurality of decoding operations is performed on each sub-channel received by the DAB application.

### OPERATION OF THE RECEIVER APPLICATION

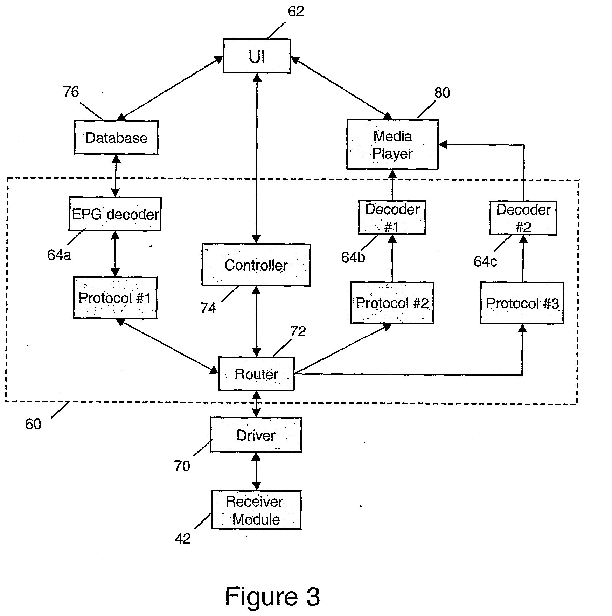

Figure 3 comprises a schematic diagram showing some functional components of an embodiment of a receiver application 60 according to the invention.

Figure 3 2 will now be described with reference to DAB technology, although those skilled in the art will find apparent that the functionality described herein in the context of DAB standard technology may be implemented using other digital broadcast technology.

In Figure 3, the receiver application 60 comprises a DAB receiver application which is supported by the operating system of the mobile communications device and comprises means to exchange control and receiving signalling information from the receiver circuitry (here a hardwired DAB receiver module 42) and a suitable driver 70 for receiving a plurality of sub-channels from the receiver module (for example, a Serial Peripheral Interface driver). The DAB receiver application comprises a number of components, including a router component 72, which is controlled via a controller component 74 (which interfaces with a user interface of the mobile communications device). Unless the sub-channels are received in a de-multiplexed form, prior to the routing operation, a demultiplexing operation will be performed. Router 72 selectively routes received sub-channels according to their type and protocol to one or more decoder components 64a,b,c. Decoder 64a is arranged to decode electronic programme guide data conveyed by a sub-channel conforming to a first protocol #1. Each EPG file is then processed in the manner described in more detail herein below to generate individual programme records which are stored in data store 76. Decoders #1 and #2 64b,c are arranged to decode bearer sub-channels conforming to protocols #2 and #3, for reproduction of the various service components on video/audio output means of the mobile communications device via media player 80 and/or user interface 62.

The sub-channels received via the channel(s) the driver 70 provides comprise one or more bearer sub-channels for audio and/or video entertainment channels and one or more data bearing sub-channels conveying electronic programme guide information for the received plurality of sub-channels. The sub-channels received by a router component 72 of the DAB application will all have the same multiplex frequency (unless the DAB receiver module 42 is arranged to simultaneously receive a plurality of DAB channel multiplexes at different frequencies and provide these to the DAB application). Router component 72 may be provided in a pre-configured or a configurable/reconfigurable form (and by analogy partly implemented in hardware and/or in software).

The DAB application 60 shares one or more memory resources provided on the mobile communications device through a number of appropriately configured interfaces which are not shown in Figures 2a,b or 3 but which are also supported by the operating system of the mobile communications device. The memory is shared with other applications running on the operating system and comprises any appropriate form, i.e., both static and/or dynamic memory may be shared between the DAB application and one or more other applications.

The DAB receiver module 42 outputs bearer and data channels which are partially decoded to the extent that the DAB receiver application 60 is capable of identifying which one or more of a plurality of bearer and/or data channels received from the DAB receiver module 42 should be further decoded by the DAB application 60 using signalling information received from the DAB receiver module 42 and in accordance with control information provided by user through the user interface (UI) 62. In one embodiment of the invention, the bearer and data channels remain in a multiplex form, i.e., time-division multiplexed, when output by the DAB receiver circuitry to the DAB application components.

When router 72 receives the plurality of bearer sub-channels and a data sub-channel comprising electronic programme guide information for the received multiplex from the DAB receiver module 42, the router 72 is configured to distribute one or more received sub-channels to an appropriate reconfigurable decoder component(s). In Figure 3, a plurality of reconfigurable decoder components 64a,b, and c are shown (cf. decoder 64 in Figure 2).

In the exemplary embodiment shown in Figure 3, three sub-channels are extracted from a received multiplex for decoding by the DAB application 60. Router 72 separates the sub-channels for processing by additional components of the DAB application 60. As shown in the exemplary embodiment of Figure 3, each sub-channel conveys a signal. These represent different service components, for example, one sub-channel conveys EPG information, and the other two may convey components of one or two different entertainment channels.

In Figure 3, a received sub-channel conforming to protocol #1 is decoded by an electronic programme guide (EPG) decoding component 64a, and processed as described in more detail herein below. The decoded, processed EPG information is then stored in a database 76. Bearer Sub-channels conforming to differing protocols #2 and #3 are routed to respective reconfigurable decoders 64b and 64c. The reconfigurable decoders 64b,c are arranged to only decode source encoded sub-channels which the user of the mobile communications device has subscribed to, and router component and/or the decoder component and/or media player component may control the decoding operation to ensure that only content for which the user has subscribed to is decoded. Although two simultaneous decoders 64a,b are shown in Figure 3, which enables one sub-channel to be recorded and stored (not shown in Figure 3), one decoder is sufficient if recording and simultaneous viewing of an alternative sub-channel is not required. Alternatively, one decoder may be used to decode an audio sub-channel and another a video sub-channel for service components which are part of the same or differing service channels of the same ensemble. In one embodiment, companion data services are provided using one or more subchannels.

It is also possible to provide more than two reconfigurable decoders, which would enable two sub-channels to be stored whilst a user views a third sub-channel. This requires more shared memory resources (used by the decoders), increases the amount of processing power the decoding component utilises and may require more resources for the stored programme(s).

A decoded sub-channel is provided in a form which enables appropriate reproduction by a media player application (80) also supported by the operating system of the mobile communications application, such as Windows Media Player™. The operation of the DAB application in terms of which sub-channel (or more than one sub-channels if recording features are implemented as described above) is selectively decoded from a multiplex of sub-channels received from the DAB module is controlled by the user through a suitable user interface 62 which is provided with programme information from the database 76 of electronic programme guide content. The selection may be implemented by the DAB Controller 74 which is controlled by the user interface component 62 in one embodiment of the invention to enable selection of one or more specific sub-channels for delivery of a service channel to audio and/or video output means of the mobile communications device.

To enable the DAB Controller to selectively control which sub-channels are required for decoding a particular service channel, the router component 72 of the DAB component is also reconfigurable. Each sub-channel in the TDM multiplexed content stream which passes through the interface between the DAB receiver module 42 and DAB application 60 running on the operating system of the mobile communications platform is capable of being identified in the multiplexed stream using signalling information (e.g. the FIC) which accompanies the MSC information in the DAB multiplex signal. The processor implementing the routing function provided on the mobile communications platform uses the signalling information generated by partially decoding the received DAB multiplex to determine what sub-channels require decoding. The information to identify individual sub-channels in the received data stream can be provided by the DAB receiver module 42 over the interface 58 with the DAB application 60.

DAB receiver module 42 outputs a DAB ensemble comprising multiple service channels sharing one or more DAB bearer sub-channels in which each service channel is separately identified by having its own DAB service ID. The DAB service ID information enables each sub-channel to be mapped by the DAB application 60 to appropriate user-friendly sub-channel identifier for display in an electronic programme guide.

In a preferred embodiment of the invention, when tuned to a service on a multiplex or at other times, the DAB application 60 will automatically identify all EPG services on the applicable multiplex and will download and decode them. EPG services are appropriately signalled to the DAB application 60 by the DAB receiver module 60. Thus in one embodiment, the SCId of the packet service is signalled by FIG0/2 with TMId =11b (MSC packet data) and each EPG service is provided with a single primary service component. Data group DG=0, DSCTy =111100b (MOT), the sub-channel ID used to carry the data, and the DB packet address used within that sub-channel for the services are signalled by FIG0/3 and the corresponding SCId. In some embodiments, multiple data streams are carried within the same sub-channel. This requires each data stream to use different packet addresses, increases the receiver power consumption and can also decrease the Reed-Solomon forward-error correction.

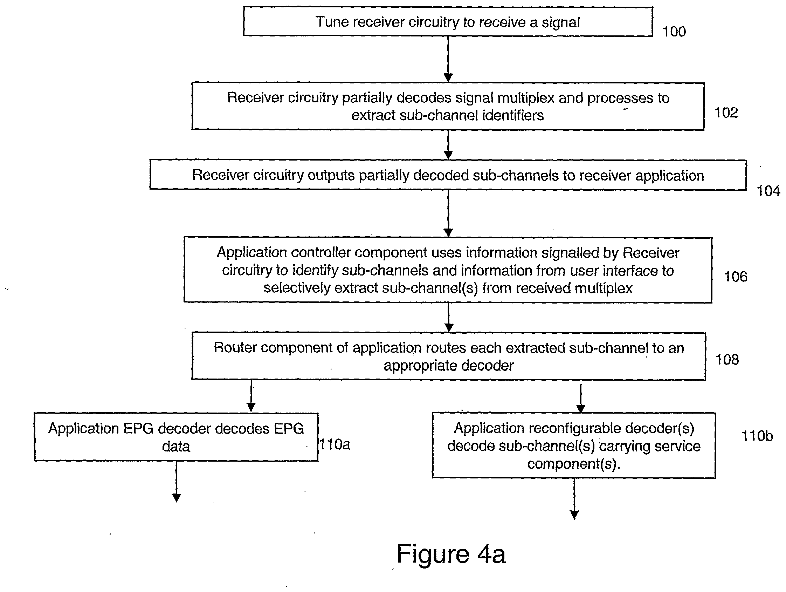

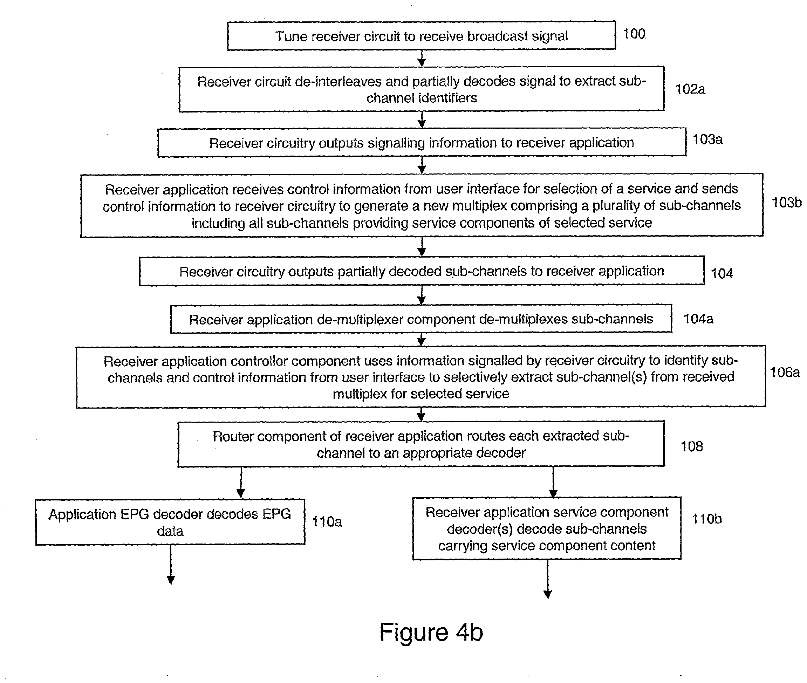

Figures 4a and 4b show schematically certain steps performed in methods of receiving and playing digitally broadcast service channels according to the invention. Figure 4 shows an embodiment of the invention, in which a receiver module 42 is tuned to receive a digitally broadcast multiplex signal using control information provided by user interface 62 (step 100). The receiver module 42 extracts sufficient information by decoding the received signal to enable sub-channel identifiers to be determined (step 102). The controller component of the receiver application receives the signalling information (step 104) extracted by the receiver module 42 and uses this to identify which sub-channels carry service components of service channels(step 106). The user selects a service channel to view using the user interface 62, and this information is processed by the controller component to configure the router 72 to select the appropriate sub-channels carrying service components for the selected service channel to be directed to suitable encoding elements of the receiver application 60 (step 108). The controller also controls the background processing of sub-channels carrying electronic programme data, or other data, for example, data enabling the receiver application to be reconfigured. The provision of at least two decoding components by the receiver application enables simultaneous decoding of EPG data by a first decoder (step 110a), whilst a second decoder(s) decode signals conveyed on bearer channels to allow a user to consume the service channel as requested.
Figure 4b shows the steps which are required for the mobile communications device of the type shown schematically in Figure 2b to receive and display a digitally broadcast audio/video signal such as a DAB signal.

In this embodiment of the invention, the receiver circuit is tuned to receive the broadcast signal (step 100). The receiver circuit de-interleaves and partially decodes the signal to extract sub-channel identifiers (step 102a), and provides signalling information to the receiver application via interface 58b (step 103a).

The receiver application receives user input from the user interface 62 to select a particular service channel for display. In other embodiments, users can input one or more channels to record in addition to/instead of displaying a service channel. This input is processed and control information is sent to the receiver circuitry to tune the receiver and/or select a particular set of sub-channels including the sub-channels carrying the service components for displaying the user selected service channel which the receiver circuitry multiplexes (step 103b). In one embodiment of the invention, the set of sub-channels selected includes the sub-channels for the user-selected service channel components and sub-channels carrying electronic programme guide for all service channels of the broadcast signal received by the receiver circuitry.

In one embodiment, the sub-channels are partially decoded prior to being re-multiplexed by the receiver circuitry for output to the receiver application (for example, DAB sub-channels are partially decoded following one or more decoding operations performed by the receiver circuitry to remove transmission encoding). The partially decoded multiplexed channels are sent via an interface (e.g., interface 58b in the embodiment shown in Figure 2b) to the receiver application (step 10r). A component of the receiver application then de-multiplexes the received sub-channels (step 104a).

A controller component 74 of the receiver application then uses the signalling information provided via interface 58b from the receiver circuitry to identify individual sub-channels and control information from the user interface to selectively extract relevant identified sub-channel(s) for the user selected service channel and also any other sub-channels which the receiver application is configured to process, such as sub-channels carrying data for a data service component such as electronic programme guide information (step 106a).

A router component of the receiver application (which also performs the above demultiplexing/extraction processes in one embodiment of the invention), then routes each extracted sub-channel to an appropriate component of the DAB application for further processing, for example, in Figure 4b, the router component routes each extracted sub-channel to an appropriate decoder (step 108). In Figure 4b, an EPG decoder component of the receiver application decodes EPG data in the manner described in more detail hereinbelow (step 110a) and one or more decoder components of the receiver application will decoded one or more sub-channels for selected service channel(s).

### MEMORY MANAGEMENT

In one embodiment, on start up of the mobile communications device and during execution of the receiver application programme, the receiver application will check if sufficient memory is available for it to execute. In another embodiment, it will also check for sufficient resources such as memory, processing power, battery power, when generating, updating and displaying electronic programme guide information and during related processing steps. If sufficient resources are not available, of if they approach a predetermined cut-off value, the receiver application automatically requests the operating system of the mobile communications device to provide more memory by closing down other applications. In one embodiment of the invention, a predetermined hierarchy for the closure of applications is established based on a predetermined set of rules, which may be generated by the receiver application, the operating system, and/or the user. If the closure of other applications does not provide enough memory to enable the receiver application to continue, the receiver application is configured to automatically close down prior to running out of memory. In one embodiment of the invention, instead of the application (or operating system of the device) automatically closing down other processes and/or application, a user of the device is able to selectively control which applications and the order of applications to shut down in preference to maintaining the receiver application operational or delay installation/operation of one or more components of the receiver application.

In the above description of the invention, features which have been explicitly recited with reference to one embodiment may be included in other embodiments of the invention in any appropriate manner apparent to one of ordinary skill in the art.

The invention thus provides a receiver for digitally broadcast signals comprising components configured in hardware (receiver circuitry) and components implemented using software which runs on the operating system of the mobile communications device. Features described herein which are not explicitly indicated as being provisioned in one form may be provided in an alternative form.

### CONFIGURATION PROCESS

The following embodiment describes the process where a DAB receiver application is implemented for the display of DAB service channels on the mobile communications device. Those of ordinary skill in the art, however, will be aware that equivalent features and functionality can obviously be implemented for alternative digital broadcasting technologies.

DAB application 60 also contains a user interface 62 and other means to interface with the operating system of mobile communications device 40. The user interface 62 enables a user to selectively control what DAB channel is played/displayed, to access EPG information and also request the DAB application to be verified and/or upgraded remotely. It is also possible for a user to request activation of certain features of the DAB application which might be provided but not activated when the device originally ships to the user.

In this way, a mobile communications device according to one embodiment of the invention is provided with a DAB receiver which is reconfigurable by a remote server. The DAB application 60 may be pre-installed when purchased by the user, partially installed, or fully installed, but in each case, the DAB application 60 can receive additional and/or replacement components subsequent to the mobile communications device being purchased by a user by utilising the mobile communications functionality to download additional software.

In one embodiment, a DAB service provider is able to remotely configure/reconfigure certain features of the DAB application using an appropriate interface with the mobile communications device, for example, to push software upgrades to enhance the DAB receiver functionality as a downloaded file which will self-install within the operating system of the mobile communications devices.

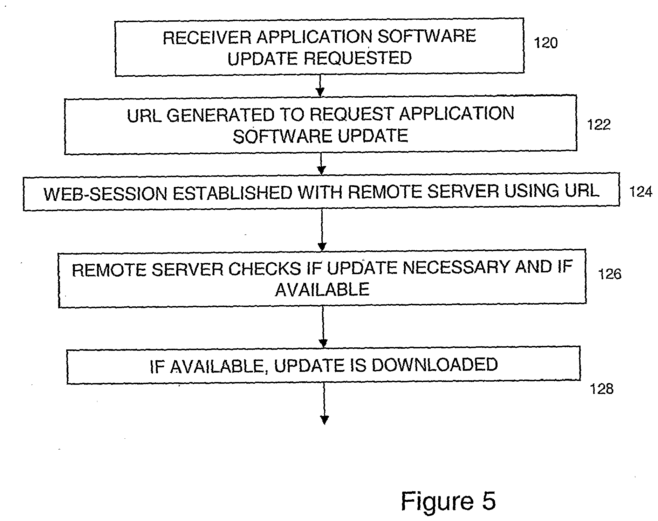

Figure 5 of the accompanying drawings shows an overview of one embodiment of a reconfiguration process according to the invention. In Figure 5, a DAB application software update is requested, either automatically or by a user of the mobile communications device (step 120). This causes a Universal Resource Locator to be generated (step 122) which contains a number of fields which identity key features enabling a remote server receiving the URL to identify whether an update is appropriate (described in more detail herein below). A web-session is established with the remote server using the URL (step 124), and the remote server processes one or more fields of the URL to determine if an update is required (step 126). If an update is available, the remote server provides a suitable update by providing a file for download to the mobile communications device (step 128).

### USER INITIATED RECONFIGURATION OF THE DAB APPLICATION

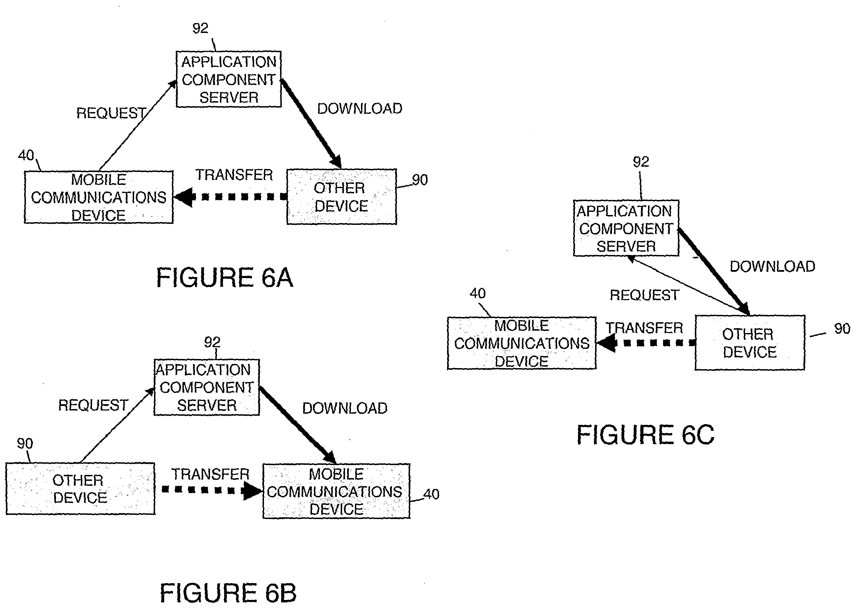

In one embodiment of the invention, one or more receiver application components are obtained by generating a request which is sent to a remote server 90. The remote server 90 is configured to process the received request to provide one or more receiver application components or a complete receiver application for installation on the mobile communications device. The request and download processes utilise the mobile communications device in some embodiments, but in other embodiments of the invention, a proxy device may be used to generate the request and/or receive the download (see Figures 6a,b,c, described in more detail hereinbelow).

An embodiment of the invention will now be described in which a user requests an upgrade via the user interface 62 of the mobile communications device (although in alternative embodiments this may be generated using an appropriate application provided by another device capable of conveying the request to the remote server). The input from the user interface 62 generates a request which is sent to a remote server. The request may indicate which component(s) are required, or this may be determined by the remote server using version information for the current application and/or device characteristics and/or the subscriber identity. In a preferred embodiment, the request is communicated over a bidirectional wireless communications network to the remote server and establishes a web-browsing session between the mobile communications device and the remote server.

The request is transmitted using one or more appropriate wireless communications protocols, e.g., WiMax, Wi-Fi, 801.11x, GPRS or 3G over an appropriate wireless network infrastructure. More details of the way a request is generated are provided below. Once the request is received by the relevant server (i.e., the server which is configured to respond to such requests), it is processed to identify one or more DAB application components suitable for download to the mobile communications device, and these are then provided to the mobile communications network in a form suitable for downloading over said bi-directional wireless communications network.

The mobile communications device operating system is arranged to install the received said one or more DAB application components onto said mobile communications devices. In this way a DAB application comprising a number of such components can be provided to the mobile communications device and an existing DAB application already provided on the mobile communications device can be upgraded by providing relevant replacement and/or additional components. Alternatively, installation and/or upgrading of software on the mobile communications device can be performed using any appropriate combination of two uni- or bidirectional communications links, which do not need to involve the same network (for example, a DAB broadcast download can be provided in response to an upgrade request sent over the GPRS link from a mobile communications device). This enables upgrades to be broadcast to all devices (e.g. compulsory upgrades) as well as enabling uni-cast upgrades to specific mobile communications devices. This is particularly useful for enabling software patches to be provided and faults (bugs) to be rectified without asking users to return their mobile communications devices (which unlike set-top boxes may be indispensable) to a service centre. It is also possible for the mobile communications device to use a proxy device to obtain downloads, which is described later herein below with references to Figures 6a,b,c of the accompanying drawings.

### REMOTE PROVISIONING/CONFIGURING OF THE DAB APPLICATION

In one embodiment of the invention, the user is presented with a selectable option from the menu of the user interface to check for software updates. This may be performed using a dedicated key, button or other user-activated means such as a menu or an icon on a graphical user interface.

This generates a request which is communicated to a remote server using a mobile communications protocol, e.g., over a cellular network which supports digital data being transmitted bidirectionally between a mobile communications device and a remote server, for example, WiMax, WiFi, Bluetooth, GPRS, 3G wireless data networks.

In one embodiment, the request may be generated as part of an Internet browsing session with the remote server, or it may be sent in the background (e.g., whilst other applications run in the foreground on the mobile communications device). The URL for the request is generated as a HTTP GET request in accordance with IETF RFC 2616 (1999-2006):Hypertext Transfer Protocol-HTTP/1.1 (a copy of which is available from the Internet Engineering Task Force (IETF) web-site well-known to those skilled in the art), with the following format: http://<baseurl>?<search> where <search> consists of one or more fields of the form <attribute>=<value>, separated by the ampersand character (&) (see below for an example).

The <baseurl> will correspond to a value which is pre-provisioned on the mobile communications device. In one embodiment the value of the <baseurl> is hardwired or hard-coded into the TV and Radio application for security, alternatively, it could be stored by software and suitably encrypted. If hardwired or hard-coded, it is only modifiable by an upgrade of the application configured on the mobile communications device. Alternatively, if suitable security provisions are available, it may be provided in a reconfigurable form (i.e., stored by software), in which case it is possible to dynamically change the baseurl.
When establishing a web browser session, the following field attributes are provided by the mobile communications device: query version, action, DAB date and time, device phone number, device hardware ID, device screen size, device version, UserServiceProvider ID, Service ID. For example: http://www.xyz.com/open.aspx?QVER=1&ACT=1&DDAT=2005-09-06T11:28:15&DID01= abcdefg&DID02=abcdefg&DSS=abcdefg&DVER=abcdefg-DABplayer-1.2.3 &USID=abcd&SID=abcdefg

The attribute names and values shown above are exemplary only. QVER is the attribute name for query version which specifies the version of the query that follows. ACT is the attribute name for the action which specifies the type of query. DDAT is the attribute name for the DAB date and time when the request was generated on the device or when the session with the server was first opened. DID01 is the attribute name for the device phone number; this may be modified by the user. DID02 is the attribute name for the device hardware ID which is a pseudo-unique 64-bit identifier derived from the device Id in a way that is not reversible but is unlikely to result in duplicates, which users are not able to modify. DSS is the attribute name for the device screen size to allow the server to render content appropriately. DVER is the attribute name for the device version, which is assigned by the device manufacturer (or any other party) to assign a name to different versions of the same device. USID is the attribute name for the user service provider identity; this may be configured by the mobile communications device manufacturer, for example via WAP. SID is the attribute name for the service identifier and specifies the service the user is currently consuming.

The ACT field may take a number of values, including an ACT_SOFTWARE_UPDATE value. The server receiving the update request will then inspect the DVER field to determine an appropriate response. If the DVER is not recognised it will provide a response indicating that the DVER is unknown, for example in the form of a text file "unknown.txt". If the DVER is recognised as being the most up to date version for the hardware, the server responds with an appropriate text file, and if the DVER is recognised as not being the most recent version available for the mobile communications device hardware, a signed software update compressed installation file in a suitable format for the operating system of the mobile communications device (for example, a MicrosoftCAB™ file) will be provided in response which will update the current software to the latest version.

Two types of installation file may be used, depending on whether the installation file contains a compressed copy of all the application files (i.e., all the components of a DAB application are downloaded and a full install is performed) or if the installation file contains only a "patch" comprising one or more components. Where a "patch" is to be installed, the installation file also provides a "patcher" programme to read the existing application files and apply the "patch" to create the new, upgraded version (or to repair any existing application files which have become corrupted or otherwise developed a fault). A "patch" is limited to those components whose installation will implement the necessary upgrade or repair which reduces the size of file needed to download to obtain a new version of an existing DAB application. Whilst the term component has been used herein to refer to specific DAB application functionality, in one embodiment, a patch is limited to comprising sub-components of the DAB application, i.e., only part of each application component. In this way, for a specific component, a patch can comprise either the entire replacement component or only differing sub-components between the new component and the current component installed on the device.

Prior to installing a software update, the application automatically updates the web url favourites list of the user to provide a backup route for the user to get a full software update. The URL saved as a backup route is the same as that originally issued to get the update, except that the DVER field is set to a fail safe value. Where changes are small, the update may be a small patch to bring the software up to date, or where changes are more significant, the update will be a complete new version.

### INSTALLATION BY PROXY SERVER

Figures 6a, 6b, and 6c show alternative embodiments of the invention in which the mobile communications device 40 is provided with suitable data interface means to connect with another device 90 (e.g., a personal or laptop computer), and the other device 90 is used as a proxy to request and/or download one or more DAB application components from a DAB server 92. If the mobile communications device 40 is connected to the other device 90 at the time the DAB application components are downloaded, the other device 92 functions as a proxy server which relays the DAB application components it receives directly on to the mobile communications device 40. Alternatively, the other device 90 may store the received DAB application components until a user connects it to the mobile communications device 40 in a suitable store. In this embodiment, either the other device 90 drives any subsequent transfer process of the downloaded content when the mobile communications device connects to it or the mobile communications device 40 drives the transfer process. In either case, an identifier of the mobile communications device will be checked as being the same identifier associated with the final destination for the DAB application components the other device 90 has received from the server 92.

Figure 6A shows an embodiment in which a mobile communications device 40 generates a request to the DAB application server 92 in the manner described hereinabove, but with additional information as a download to the other device 90 is now also requested. This is done in any appropriate way known to those of ordinary skill in the art. For example, in one embodiment, an identifier which the DAB application can resolve to a network address for the other device 90 is provided as a destination address for the downloaded data and included as part of the web-browser session initiation information (for example, it can simply be appended to the url for the download server). In Figure 6A, mobile communications device 40 generates the request, the server 92 receives and processes the request and pushes the download information to the other device 90. The other device 90 then pushes the downloaded files across an appropriate interface to the mobile communications device 40.

Figures 6B and 6C show embodiments where another device 90 requests a download of DAB application components (which maybe to the other device initially as is shown in Figure 6C or directly to the mobile communications device as shown in Figure 6B). The other device in these embodiments will establish a session to the download server in a similar manner to that described above where the mobile communications device establishes the download session with the remote server 92. However, to ensure that the downloaded software is only installed on the mobile communications device 40, the request sent by the other device 90 must include details of one or more identifiers for the mobile communications device 40 (as described above). This information can also be determined by connecting the mobile communications device 40 to the other device 90, for example, and/or running a suitable software application on the other device (which is provided on a suitable carrier medium (for example, such as a CD or DVD) to the user when they first purchase the mobile communications device 40. Alternatively, if a user of the other device 90 were to access the download server 92 by a web-portal and establish a session with the download server 92, a prompt to the user to ask the user to connect their mobile communications device 40 to the download server 92 is provided. These techniques enable the user of another device 92 to include the additional download address information associated with the mobile communications device to ensure that the file downloaded is for installation on the right type of device 40.

In one embodiment of the invention, to provide security and simplify the request and download process, the mobile communications device 40 is connected to the other device via a suitable interface to extract information on the identifier(s) for the mobile communications device 40 and/or other device 90. A mobile communications device 40 is capable of determining from this connection the address of the other device 90, and vice versa. Alternatively, other unique identity information (such as for example, might be retained in a user profile for a SIP-enabled mobile communications device 40 and a SIP-enabled other device 90) to provide to the remote server 92 (more details are provided below). Where a different device identity is provided from the identity of the mobile communications device to which the DAB application components are to be downloaded, in one embodiment, the installation process does not execute for the DAB components until the mobile communications device 40 connects to the other device 90 and the DAB application components are transferred to the environment of the mobile communications device operating system.

Some embodiments of the invention are suitable for implementing in a Session Initiation Protocol (SIP) enabled environment, in which each user has a user-profile indicating all devices associated with the user. The user-profile may have rules associated with certain functions which can be performed on the devices 40,90 associated with the user, which may be time and location specific, such as, for example, only provide downloads to device 40 after 6pm or on Sunday's at 6am and only provide when the user is in a region associated with a high-speed wireless access link etc.

This additional information enables more flexible download schemes, such as those, for example, shown in Figs. 6a to 6c. In such embodiments, the device requesting the upgrade provides an identifier to the download server 92 which is associated with the user, whose profile can be checked to determine the identity of the mobile communications device 40 which is to be configured with the downloaded DAB application components. In some embodiments, this removes any necessity to append additional device identifiers to the URL to the download server 92.

The download server 92 receives the request from any device, determines from the device identification information for that device 40, 90 the identity of the user associated with that device. The user identity is used to retrieve the profile for that user from a data store. The download server then determines what other device(s) 40, 90 associated with that user identity is (are) capable of receiving the download, and establishes if the user has set up any rules to determine how information is to be downloaded to the device(s). The download server 92 may then either download to a destination device determined in accordance with any predefined rules established for that user profile (which may or may not be directly to the mobile communications device), or alternatively downloads only to one or more devices associated with the user which have connections available with higher bandwidths. In one embodiment, the DAB multi-casts the download to a plurality of other devices associated with the user profile (regardless of location, for example, a work computer, laptop, home computer etc,) and when the user subsequently connects the mobile communications device 40 to any of these other devices the mobile communications device automatically receives the downloaded DAB application components.

In this way, large reconfiguration files can be downloaded using higher bandwidth connections with the server, to the other device and then transferred to the mobile communications device. This embodiment can use less resources of the mobile communications device for the download process. This embodiment also enables the user of the mobile communications device to manage when the upgrade is installed, which allows the user to control when installation uses up resources such as processing, memory and power, and also avoids downloads occurring when the mobile communications device is otherwise in use by the user (e.g., the user is watching a television programme on the device or using the device as a telephone) which could create conflicts with the installation process.

Where a connection is established between the mobile communications device and the other device which is capable of recharging a battery power resource of the mobile communications device, the mobile communications device is configured with the downloaded DAB application components without power constraints being imposed on the installation process. The diversion of a download to another device associated with the user process could be automatically triggered by the mobile device 40 indicating to the server 92 that it has limited processing and/or power and/or memory resources at that particular time. Alternatively, instead of triggering a diversion of a download to an alternative device, the same information can be used to trigger a delay (for example, for a random or pre-determined amount of time) before the remote server 92 pushes the download to the mobile communications device 40.

The embodiments shown in Figures 6A, 6B, and 6C enable a user to upgrade the functionality of the DAB application for their mobile communications device simply by sending a request using either their mobile communications device itself or a computer suitably capable of establishing a web-browser session (or any other file transfer session) with the DAB application server. The request indicates where the downloaded DAB files should be sent by the server, and the user of the mobile communications device can then establish a connection with this device to obtain the DAB application components (which could be a short-range wired connection such as might be implemented by a USB cable connection or a wireless connection such as Bluetooth™.

### ELECTRONIC PROGRAMME GUIDE FEATURES

In one embodiment of the invention, electronic programme guide information is provided in the form of files conveyed by one or more sub-channels of a multiplex, for example, files which conform to the Digital Audio Broadcasting Multi-media Object Transfer (MOT) protocol for the distribution of electronic programme information, which is described in more detail in ETSI TS 102 371.

A standard MOT file comprises programme information for the predetermined period of one day for one service channel, i.e., which lists all the programmes per "entertainment" audio/video channel within a 24 hour period. Two types of MOT files are provided. The first type of file provides basic electronic programme guide (EPG) information contains information on one service channel for a predetermined duration (e.g., a day or 24 hours), the second type provides advanced EPG information which provides additional detail for one or more programmes listed in the corresponding basic MOT file. Conventionally, an MOT carousel comprises a number of both types of files which are conventionally indexed by channel and by day. Within each file, data is ordered for that channel by time of day. This pre-defined indexing of the data makes the look-up process very inefficient for certain search criteria. For example, conventionally, to find all programmes from any channel at a certain time of day on a certain day requires a number of files to be opened and searched. This requires processing power, a limited resource on mobile communications devices in most operational modes of use. In particular, more processing power is required where an electronic programme guide comprises information from a plurality of files. For example, if information for one channel and day is split into two separate files a "basic information" file and an "advanced" information file, then to obtain the complete information on a programme, both files are read and the records from each reconciled.

An exemplary basic EPG (ehb) programme information file takes the form:

```
 .
 Tag xx Length xxxx <epg>
 Tag xx Length xxx <tokenTableElement>
                       Oc=[blah_attribute_value] 4
                        03=[blah_another_attribute_value]
                        0e=[blah_another_attribute_value]
 ...
 Tag xx Length xx <defaultcontentIDElement> attribute_value (e.g. e1.ce15.c22c.0)
 Tag xx Length xxxx <schedule>
  Tag 80 Length 2 <version> attribute_value (e.g., 4)
  Tag 24 Length 14 <scope>
   Tag 81 Length 5 <stopTime> attribute_value
                        (for all programmes listed in the file e.g. 2006-06-13T23:00+1:00)
   Tag 80 Length 5 <startTime> attribute_value
                        (for all programmes listed in the file, e.g. 2006-06-12T23:00+1:00)
```

Then for each programme the file contains the following type of information:

```
  Tag 1c Length 59 <programme>
   Tag 81 Length 3 <shortld> attribute_value (e.g. an identifier such as 0123456)
   Tag 11 Length 15 <mediumName>
    Tag 01 Length 13 <CDATA> attribute_value
                                (e.g., an abbrieviated title such as "Day of the Trif∼")
   Tag 12 Length 20 <longName>
    Tag 01 Length 18 <CDATA> attribute_value
                                (e.g., the actual title, such as "The Day of the Triffids")
   Tag 19 Length 13 <location> attribute_value
    Tag 2c Length 11 <time> attribute_value
      Tag 81 Length 2 <duration> attribute_value (e.g. 00:30:00)
      Tag 80 Length 5 <time> attribute_value (e.g. 2006-06-12T23:00+1:00)
```

More detailed information on programme content is provided in a second file, exemplary extracts from an advanced (eha) EPG programme information file and the first programme listing (of many) is shown below:

```
 Tag 02 Length 11533 <epg>
 Tag 05 Length 6 <defaultcontentIDElement>
 Tag 21 Length 11521 <schedule>
  Tag 82 Length 3 <originator>
  Tag 80 Length 2 <version> 4
  Tag 81 Length 6 <creationTime>
 ...
  Tag 1c Length 806 <programme>
   Tag 81 Length 3 <shortld>
   Tag 80 Length 32 <id>
   Tag 19 Length 13 <location>
     Tag 2c Length 11 <time>
       Tag 83 Length 2 <actualDuration>
       Tag 82 Length 5 <actualTime>
    Tag 13 Length 698 <mediaDescription>
     Tag 1 a Length 154 <shortDescription>
       Tag 01 Length 152 <CDATA> Join Mrs. Blah for more from her amazing show,
 with lots of interesting characters and fun things to watch. [Rptd today 3.00pm]
     Tag 1b Length 538 <longDescription>
       Tag 01 Length 534 <CDATA> Join Mrs. Blah for today's funny stories. After a
 wander around a strange park listen to the next part of "Domestic Appliance Confessions". In
 the next episode of Some Schoolboy Yarn, Joe Bloggs finds out that his maths teacher is
 actually trying to teach him algebra. We travel to the town of Dinosaur Jewel next, in a
 particular author's tale about an imaginary member of royalty. And finally, discover some even
 more detailed information...
    Tag 14 Length 5 <genre>
     Tag 80 Length 3 <href>
...
    Tag 14 Length 5 <genre>
     Tag 80 Length 3 <href>
    Tag 18 Length 34 <link>
     Tag 80 Length 23 <url>
     Tag 83 Length 7 <description>
```

The above textual information is representative of the meta-data formatted files which are downloaded via the DAB multiplex sub-channel(s) which provide the relevant descriptive information, for example as .xml formatted files.

Both the basic and advanced electronic programme guide information are provided in the same data stream, but alternatively, they can be provided in separate data streams. Where this occurs, the receiver application of the invention is able to receive both data streams but to process only basic electronic programme files under certain conditions, for example, if processing, power or data storage resources are limited. Alternatively, a user of the mobile communications device may selectively configure the receiver application using the user interface of the mobile communications device to decode only the basic electronic programme guide information.

As the above extracts show, the structure of an electronic programme file is such that for each day of programming a file must be downloaded for each service channel (i.e., for each entertainment channel provided on a multiplex). It is advantageous commercially to use the "EPG" to advertise additional content from channels for which the user does not currently subscribe to as a means of promoting user interest in those channels. As a result, it is very tedious to a user to have to wait for an entire EPG to be populated with content by downloading and reading each EPG file as it is updated.

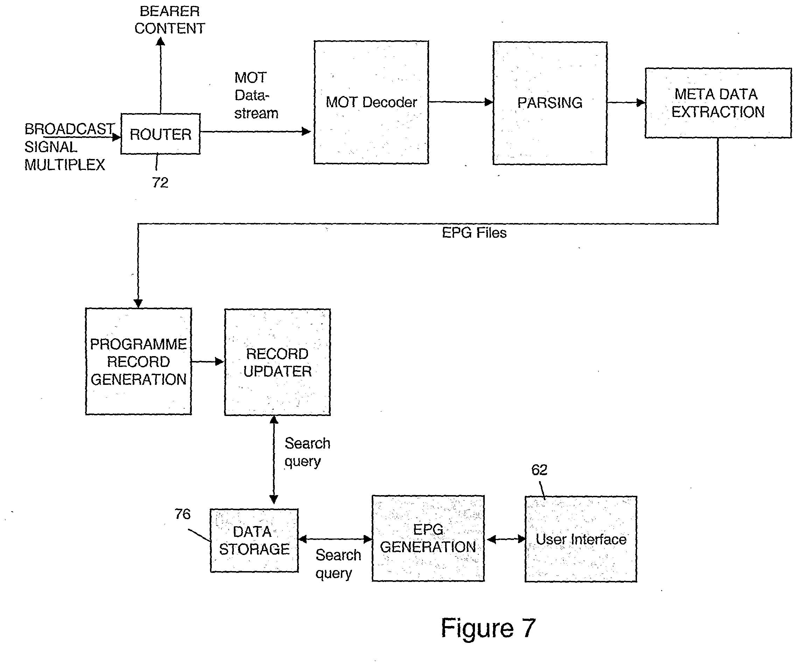

In one embodiment of the invention, with a view to decreasing the delay experienced by a user who has requested to view electronic programme guide information prior to the display of the electronic programme guide, as each file is streamed to the DAB application by the DAB receiver circuit, it is opened and processed. Figure 7 of the accompanying drawings shows an overview of this process.

In Figure 7, router 72 has separated out the relevant sub-channel(s) containing electronic programme information. This may require additional decoding steps (not shown in Figure 7) in some embodiments of the invention) prior to the electronic programme file being parsed to extract certain relevant metadata and to enable, for each information component relating to an individual programme, a programme record to be created and stored.

In one embodiment, once a record has been generated, a update process is performed. This verifies if a record previously exists for that programme in data storage component 76. This process is described in more detail hereinbelow. The data records in the data storage component 76 are indexed to facilitate their retrieval for the generation of programme guide information, which is then displayed. The display programme guide information is interactive so that when a user selects a particular display icon, an action takes place, for example, the relevant programme is displayed and/or recorded and/or additional electronic programme guide information is displayed. Alternatively, the user interface may be configured to enable the user to selectively extract information from the data store 76 to generate a personalised electronic programme guide or to generate an electronic programme guide based on one or more user-selected search criteria.

Each program record contains a number of informational elements such as the following exemplary programme record shows:

```
 { Ensemble ID (*)
        Service ID (*)
        Component ID (*)
        Programme Short ID (*)
        Programme Name
        Programme Description
        Start Time (*)
        End Time (*)
        Version
 }
```

The parser and subsequent meta data extraction and record generation processes do not in some embodiments retain all the meta data provided for each programme in the original electronic programme guide file, which reduces the memory required on the mobile communications handset to store the electronic programme component records. For example, in the above programme record the short name or actual start and/or end time and genre information have been removed. Other information has been combined from the two separate files into a single record (for example, the short description from the advanced EPG with the rest of the data from the basic EPG). The ensemble, service, component and version information given at the top of each information file is repeated within each programme record to facilitate searching based on one or more of these characteristics.

In some embodiments of the invention, not all elements of the programme record are searchable, i.e., a record may not be indexed by all elements. Thus in the exemplary record above, those elements which are search indices are denoted by a (*). Five exemplary search templates for EPG generation are shown below:
i) {Ensemble ID, Service ID, Component ID}
ii) {Ensemble ID, Service ID, Component ID, Programme Short ID}
iii) { Ensemble ID, Service ID, Component ID, Start Time}
iv) {Start Time}
v) {End Time}

As shown in Figure 7, the parsing process thus enables extraction of certain data elements which are collated in the form of programme records, one record containing information for a single programme. Once the extracted data elements have been formatted into the appropriate programme record, they are stored in data store 76 (i.e., memory) which is accessible by the DAB application 60. Data store 76 comprises either memory dedicated for the electronic programme guide process or shares a memory resource with other applications running on the operation system of the mobile communications device.

The DAB application data store 76 is thus populated with a number of programme records from each file downloaded, each record comprising electronic programme guide information which is indexed by a plurality of predefined criteria, independently of whether the indexing information was provided for each file or for each programme within a file when the programme information was originally compiled prior to transmission to the DAB receiver.

As shown above, in one embodiment, a record index may be provided to locate channel and programme start time (as in each original received electronic programme guide MOT file provided by the streamed data from the DAB receiver circuit). This allows easy updates to programme information to be provided as each MOT file is received. If a programme component already has a data record associated with the same indices, the received data stream no longer processes that component and moves on to the next programme component of the received file. If a data record exists, but needs to be updated, the previous data record can simply be modified to update the relevant index information or overwritten in its entirety. If no data record exists for a programme component, then one is created. In this way, the electronic programme files are processed more efficiently, and only new information is written to data records in the data store.

In another embodiment, each data record is indexed by channel and a programme short identifier. This enables both basic and advanced programme information to be stored in the same database when received and merged prior to such information being requested by a user. If a user does request the advanced information, this is can then be presented much faster to the user, as it is already merged with the basic information. The indexing allows basic and advanced information to be received in any order and in different download sessions.

In another embodiment, each data record is indexed according to programme start time alone or programme end time alone. This allows rapid searching for all programmes, on any channel, available to watch at a certain time. It also allows old programmes to be rapidly deleted by setting a time-out rule, for example.

The configuration of the DAB receiver hardware module (a term used herein to refer to the DAB hardware circuitry) and the DAB application of the mobile communications device enables background updating of electronic programme guide data whenever the DAB receiver module is tuned to a multiplex. This enables the invention to address the inconvenience which results to a user of a conventional EPG enabled device, due to the amount of time that conventional EPG data takes to update which impacts how rapidly a conventional EPG can be rendered on a display. This delay in the generation of conventional EPG displays is additionally inconvenient to a user of a mobile communications device who wishes to conserve battery life.

In one embodiment of the invention, the DAB receiver hardware is arranged to provide a plurality of the sub-channels in a multiplex to the DAB application 60, to that the DAB receiver must output at least one data stream comprising the audio, video or other content service the user is consuming content from, as well as the electronic programme guide information. A multiplex includes sub-channels conveying electronic programme guide information from one or more channels in the multiplex for one or more of the bearer channels in the multiplex. The DAB application 60 is automatically configured to identify and process electronic programme guide for all bearer channels in a received multiplex (i.e., in any multiplex that the DAB receiver module is tuned to).

This allows a continuous download and processing of the EPG information files in the manner described hereinabove, regardless of which channel in the multiplex the user is viewing at any point. This enables the data store comprising the programme information records to be more rapidly populated and updated where appropriate with new information elements. The user can change the channel viewed, and if this is to another channel in the same multiplex, the download is uninterrupted. If the new channel is provided in another DAB multiplex, the EPG file download on the previous multiplex is interrupted and at some point in that file, a programme record in that EPG file download will not have been sufficiently processed to generate a full programme record. This means that if the user retunes to the previous multiplex, it is possible to discard any programme records or elements of programme records which are already known, and to only generate and/or update programme records with elements which are new or have updated elements and/or index element information.

As a result, effectively this means that the file processing will only continue in a downloaded electronic programme guide from the point it was interrupted (unless some of the previously downloaded programme components now require updating). The result is less processing is performed and power consumption on the mobile communications device is reduced.

In another embodiment of the invention, a DAB receiver hardware module comprises a plurality of DAB receiver circuits, each arranged to output a multiplex of sub-channels to the DAB application 60. This embodiment enables simultaneous reception of electronic programme guide information from a plurality of DAB multiplexes. In one embodiment, two DAB receiver circuits are provided, each of which provides a multiplex to the DAB application. The DAB application receives electronic programme guide information from one multiplex which contains a sub-channel bearing content consumed by the user and by selectively controlling which multiplex the other receiver circuit is tuned to, electronic programme guide information for all other received multiplexes can be obtained independently of the specific service and multiplex the user is concurrently consuming content from.

The DAB sub-channels convey video or audio or data components of a consumable service channel, also referred to herein as an "entertainment channel". Those sub-channels which convey the consumable channels are referred to herein as "bearer" sub-channels, whereas sub-channels conveying data content such as the electronic programme data comprise components of a service channel but are not "bearer" sub-channels in this context.

The DAB protocol is one of many digital broadcasting protocols which can be used to implement the invention. Other digital broadcasting protocols which are capable of conveying EPG data in a file format in which meta-data is sequentially listed for broadcast programme content over a pre-determined duration have similar limitations to that described for the DAB protocol above. These alternative embodiments also have the limitation that for each service channel received; an entire EPG file must be downloaded and appropriately rendered to generate an EPG for that service channel. This creates similar problems to the problems described herein above when such EPGs are to be implemented on devices which have more limited resources available for memory, data processing and power consumption than conventional set-top box EPGs require for example.

The best mode of the invention relates to a distribution system employing the DAB protocol to broadcast digital television content. Other broadcasting schemes are well known in the art to also provide a distribution system for other forms of audio, video and data content. The DAB protocol enables the transmission of live broadcast material with video and audio components, audio content alone (i.e., radio service channels), as well as data channels (which may be interactive) and television and pay per view video downloads, and access to a "library" of archived downloadable audio/video content. In this way, the invention provides a means of viewing electronic programme guide data for a range of digitally broadcast content, including television, radio and data content, which may be live-broadcast or comprise broadcast archived content.

Particularly where live-broadcast content is provided, the timing information for the programme guide for the live-broadcast may change. Conventionally, to update the timing information rendered on the displayed EPG, an entire updated EPG file for the service channel providing the live broadcast would need to be downloaded and processed. The invention instead enables only the programme records which have changed as a result of the live-broadcast to be updated to show new information.

The invention provides a method of generating an EPG which involves "re-indexing", i.e., which duplicates certain information indices so that instead of being provided on a per EPG file basis, the information is now directly associated with each individual programme record and stored multiple times. This is achieved by extracting the relevant programme information from the programme listing within the EPG file.

This increases the amount of memory required to retain the same information provided by each EPG file downloaded, and is counter to the technical prejudice which currently exists in this field to minimise the use of memory resources in devices such as mobile communications devices. The advantage gained is that the data structures stored reduce the processing power required to render a screen display of programme guide information which increases the rapidity with which a mobile device can generate a display of the same information which could be displayed by directly downloading an EPG.

The use of programmes having individual data records also facilitates the rapidity with which updated EPG information can be assimilated into the data store, by allowing rapid cross-checking to determine if a programme record has already been created, and if so, if the information elements within that record have changed or not. This allows the programme record creation process to bypass programme information for which a programme record already exists, if there is no change to the information elements for that record. This latter effect, in conjunction with the background download of EPG files also described hereinabove, allows EPG information to be more rapidly generated when a user requests information to be displayed. It also enables selective elements of the EPG to be rendered more rapidly than is possible using known techniques which required a plurality of EPG files to be processed, updated on a rolling basis, and rendered on a service by service basis. The EPG of the invention is always capable of generating a display, as it relies on local storage of informational elements whose data structure is such that the rendering process can be performed in a more computationally efficient manner.

The term mobile communications device is used herein to all mobile devices having limited power and constrained in size such as portable devices. Whilst some portable devices are capable of establishing bi-directional communications links within a mobile communications network, including devices capable of establishing both telephony and data communications over a mobile communications network, such as a mobile telephone handset, other portable devices may not have integrated communications capability. Such mobile devices are only intermittently mobile communications devices, in that they have an intermittent uni-or bidirectional communications capability. In this way, for example, in one embodiment of the invention, a media player is provided with the ability to dock into another device, and uses the other device to communicate with the remote server 90 in the manner shown in Figures 6c. This enables, for example, portable media players to be reconfigured remotely to play digitally broadcast signals, or even to play stored content originating from a digitally broadcast signal, but encoded in a way which would otherwise not be playable on the device (i.e., which can only be played if one or more software components of the digital media player are upgraded).

Communication links established between the server providing DAB application components for download and the request generating and/or download receiving device may be unidirectional or bi-directional, wireless or fixed. Similarly, communication links between the receiving/request generating other device and the mobile communications device may be wireless and/or wireline and uni-or bi- directional. For example, in one embodiment a GPRS data connection is established between the mobile communications device 40 and the server 92 and a broadband connection is used to download the DAB application components to the other device 90. The DAB applications are then transferred to the mobile communications device over a Bluetooth™ connection.

The DAB application is supported by the operating system of a mobile communications device and in operation, the DAB application will utilise resources shared with other applications running on the mobile communications device operating system. The DAB application 60 controls the output of the DAB receiver only at the multiplex level, selection of individual services requires operation of the DAB application 60 to enable the mobile communications device to receive and play DAB radio and television signals.

In one embodiment the DAB application 60 is automatically activated by activation of the mobile communications device 40, however in other embodiments, the activation of the DAB application 60 may be selectively controlled by a user.

As mentioned above, the DAB application is at least in part provided in software which can be remotely configured/re-configured. This may be done by a server for the radio and/or television service pushing out a new version of the software required to activate or update the DAB application to the mobile communications device. Alternatively, the user of the mobile communications device may request to check to see if an update is available for the DAB application. In another embodiment of the invention, if the current DAB application receives data having a format which is not recognised, it will automatically initiate a request to an update server to determine if an update or new version of the existing DAB application is available for download.

The DAB application 60 is capable of interfacing with the DAB receiver 42 via interface 58 which does not need to comprise the same interface means to exchange signalling and control information in all embodiments of the invention. Any implementation of a software modification to the DAB application 60 may be automatic when the new data is downloaded and controlled by the mobile communications operating system, or it may require the user to initiate acceptance of the downloaded file and to trigger installation of the file in an appropriate manner using user interface 62.

The above description indicates the best mode of the invention currently contemplated by the inventors, and those of ordinary skill in the art will be aware of obvious modifications and equivalent alternative features to those described hereinabove, and accordingly, the scope of the invention is as set out by the accompanying claims construed with reference to the above description. The requests generated may include specific details of the DAB components to be downloaded, or these may be determined in any appropriate manner known to those of ordinary skill in the art by the remote server receiving the request (or any proxy for the remote server) and be based on any of the attributes provided in the request.

The invention provides a means of generating an electronic programme guide using a DAB receiver having both software and hardware components, and in which some software components are supported by the operating system of the mobile communications device hosting the receiver. In one embodiment, receiver software also configures the DAB hardware components. All of the software components are capable of being upgraded and/or changed using one or more interfaces with the operating system of the mobile communications device hosting the receiver. Code to reconfigure and/or replace existing software components and/or code to generate new software components can be obtained by generating a request which is transmitted using the communications capabilities of the host device to a remote server, which then provide the upgrades to the requesting device either directly or via another (proxy) client device. Alternatively, a head-end server may broadcast out coded elements to a plurality of receivers.

The components of the receiver software which are supported by the processor of the host communications device can then be automatically installed when they are downloaded, whereas the installation of other software components may require prompting from a user of the mobile communications device.

In this way, a user is able to reconfigure the software components of a receiver for digitally broadcast television or other stream content so that a new service can be received, even if this requires a change to the physical characteristics of the signal(s) bearing the new service. In one embodiment of the invention, the receiver hardware selectively multiplexes a plurality of sub-channels extracted from a signal (or sub-channels from a plurality of signals if the receiver hardware is capable of tuning to more than one signal). In one embodiment the receiver hardware is provided with a control interface which enables a user to select one or more subchannels and provide suitable control signalling to the receiver sub-channel multiplexer. The sub-channels are multiplexed enable a plurality of sub=channels to be passed to those components of the receiver implemented in software for further processing (e.g., for demultiplexing and content decoding etc). In this way, a user is able to view a content sub channel associated with first EPG information whilst the receiver software extracts EPG information from a sub-channel associated with a different, second, set of EPG information. This allows background updating of EPG information for all sub-channels the receiver is capable of receiving even when the receiver is being used to view another a sub-channel associated with differing EPG information.

Thus one aspect of the invention provides a receiver for digital broadcast television or any form of streamed content having a similar signal structure in which certain features are implemented in hardware and certain features are implemented in software, which enables an electronic programme guide to be updated in the manner described herein. The features of the receiver provided using software can be reconfigured and as such are provided in a way which enables the operating system of the host device for the receiver to automatically install downloaded components of the receiver software to reconfigure the software and/or hardware of the receiver. In addition, the specific remuxing/demuxing elements of the receiver according to the invention enables the radio to use an interface designed to take a single sub-channel as input to the host device to instead allow a plurality of sub-channels to be processed using receiver software supported by the host device.

The limitations of using a mobile communications device are for many overly restrictive and in practice, where such device may connect to other devices for recharging etc, (e.g. to a desktop machine or other device say having a permanent power supply or large screen display) it is also quite feasible for the software to be downloaded and reconfigured at that point. In addition, whilst reconfiguration information can be received simply to update the decoders so they can decode different EPG information and/or allow a user to view subscribed to premium channel content, the technical concepts involved may require and/or enable other elements of the DAB receiver to be updated (including hardware where this is reconfigurable using coded components).
The text of the abstract repeated below is hereby incorporated into the description:

In a mobile communications device, a method of processing data received from digital audio broadcast receiver hardware to generate an electronic programme guide for the content provided by a plurality of sub-channels received by said receiver, the method comprising:
i) processing each file containing electronic programme information for a plurality of programmes within a predetermined period of time to extract at least one relevant informational element relating to a characteristic of each of said plurality of individual programmes;
ii) generating a data record for each individual programme, the data record having a structure which includes at least one said informational element as a searchable index enabling subsequent retrieval of said information;
iii) storing each said data record received in a data store, wherein said data store is configured to be searchable using said one or more indices.

## Claims

1. A method of processing data received from a digital broadcast receiver to generate an electronic programme guide for the content of a plurality of service channels received by said receiver, the method comprising:
i) processing a sub-channel providing electronic programme guide data, the data comprising a plurality of files, each file comprising a sequential listing of electronic programme information for a plurality of programmes of an individual service-channel which are scheduled for broadcast within a predetermined period of time, the processing step being arranged to extract data from each said file indicating for each of said plurality of programmes at least one informational element comprising a characteristic of said programme;
ii) generating a data record for each individual programme, the data record having a structure which includes at least one said informational element as a searchable index enabling subsequent retrieval of said information;
iii) storing each said data record received in a data store, wherein said data store is configured to be searchable using said one or more indices, **characterized in that** each time a new electronic programme guide information file is downloaded, a check is performed to determine if a data record has been already generated containing the same information elements for a programme and if a record already exists with the same information element, the previous record is not overwritten and the processing for that data record terminates, and the processing of the next programme in the file commences.

2. A method as claimed in any previous claim, further comprising the steps of:
automatically re-indexing information provided collectively for all programmes listed in each received file, and
generating for each programme record, one or more information elements derived from said re-indexed information comprising an individual programme characteristic.

3. A method as claimed in claim 1, further comprising the step of collating data records for a plurality of different service components to generate an electronic programme guide for a digitally broadcast textual and/or audio and/or video content distribution system.

4. A method as claimed in any previous claim, wherein said method is implemented by an application supported by an operating system of a mobile communications device, the application being arranged to receive a plurality of sub-channels from digital audio broadcast receiver circuitry, and wherein said data store utilises a resource shared with other applications running on said operating system.

5. A method as claimed in any previous claim, wherein said processing steps are performed by a remotely reconfigurable DAB application arranged to control the operation of said DAB receiver hardware so as to selectively tune said DAB receiver hardware to a DAB multiplex carrying said electronic programme guide information in a sub-channel.

6. A method as claimed in any previous claim, wherein said electronic programme guide is re-generated to show data records selected in accordance with one or more user-selected search criteria.

7. A method as claimed in claim 6, wherein said data store is configured to be searchable using one or more indices which conform to one or more user-selected criteria inputted via a user-interface of the mobile communications device.

8. A device comprising means arranged to implement steps a method as claimed in any one of claims 1 to 7.

9. A mobile communications device comprising means arranged to implement steps in a method as claimed in any one of claims 1 to 7.

10. A suite of one or more computer programmes, arranged to implement an application supported by the operating system of a mobile communications device which performs steps in the method as claimed in any one of claims 1 to 7.

11. A signal comprising instructions which are capable of being installed by the operating system of a mobile communications device to generate an application comprising a suite of one or more computer programmes which reconfigure the mobile communications device to perform steps in the method as claimed in any one of claims 1 to 7.

## Patentansprüche

1. Verfahren zur Verarbeitung von Daten, die von einem Digitalsendungs-Empfänger empfangen werden, zur Erzeugung eines elektronischen Programmführers für den Inhalt einer Vielzahl von Dienstkanälen, die durch den Empfänger empfangen werden, wobei das Verfahren umfasst:
i) Verarbeiten eines Unterkanals, der elektronische Programmführer-Daten bereitstellt, wobei die Daten eine Vielzahl von Files umfassen, wobei jedes File eine fortlaufende Auflistung von elektronischen Programminformationen für eine Vielzahl von Programmen eines individuellen Dienstkanals enthält, die zur Sendung innerhalb einer vorgegebenen Zeitdauer disponiert sind, wobei der Schritt des Verarbeitens so gestaltet ist, dass Daten von jedem File gewonnen werden, die für jedes Programm der Vielzahl von Programmen mindestens ein Informationselement angeben, das ein Merkmal dieses Programms umfasst;
ii) Erzeugen eines Datensatzes für jedes einzelne Programm, wobei der Datensatz eine Struktur besitzt, die mindestens ein Informationselement als durchsuchbares Verzeichnis enthält, das die spätere Auffindung der Informationen erlaubt,
iii) Speichern jedes empfangenen Datensatzes in einem Datenspeicher, wobei der Datenspeicher so konfiguriert ist, dass er unter Verwendung eines solchen Verzeichnisses oder mehrerer solcher Verzeichnisse durchsuchbar ist,
**dadurch gekennzeichnet, dass**
jedes Mal, wenn ein neues File mit elektronischen Programmführer-Informationen heruntergeladen wird, eine Überprüfung durchgeführt wird, um zu ermitteln, ob bereits ein Datensatz erzeugt wurde, der die gleichen Informationselemente für ein Programm enthält, und wenn bereits ein Datensatz mit dem gleichen Informationselement existiert, der vorherige Datensatz nicht überschrieben wird und die Verarbeitung für diesen Datensatz endet und das Verarbeiten des nächsten Programms in dem File beginnt.

2. Verfahren wie im vorhergehenden Anspruch beansprucht, das ferner die folgenden Schritte umfasst:
automatisches Umindexieren der insgesamt für sämtliche Programme bereitgestellten Informationen, die in jedem empfangenen File aufgelistet sind,
und
für jeden Programm-Datensatz Erzeugen eines Informationselements oder mehrerer Informationselemente, die von den umindexierten Informationen abgeleitet sind, die ein individuelles Programm-Merkmal enthalten.

3. Verfahren wie in Anspruch 1 beansprucht, das ferner den folgenden Schritt umfasst:
Vereinigen von Datensätzen für eine Vielzahl von verschiedenen Dienst-Komponenten zur Erzeugung eines elektronischen Programmführers für ein digital gesendetes Verteilungssystem für Textdateien und/oder Audiodateien und/oder Videodateien.

4. Verfahren wie in einem vorhergehenden Anspruch beansprucht, wobei das Verfahren durch eine Anwendung implementiert wird, die durch ein Betriebssystem eines mobilen Kommunikations-Gerätes unterstützt wird, wobei die Anwendung so ausgestaltet ist, dass sie eine Vielzahl von Unterkanälen von einer Empfangsschaltung für digitale Audiosendungen empfängt, und bei dem der Datenspeicher eine Ressource benützt, die mit anderen Anwendungen geteilt wird, die auf dem Betriebssystem laufen.

5. Verfahren wie in einem vorhergehenden Anspruch beansprucht, bei dem die Verarbeitungsschritte durch eine entfernt befindliche rekonfigurierbare DAB-Anwendung durchgeführt werden, die dazu ausgestaltet ist, den Betrieb der DAB-Empfänger-Hardware so zu steuern, dass die DAB-Empfänger-Hardware selektiv zu einem DAB-Multiplex eingestellt wird, das die elektronischen Programmführer-Informationen in einem Unterkanal überträgt.

6. Verfahren wie in einem vorhergehenden Anspruch beansprucht, bei dem der elektronische Programmführer erneuert wird, um Datensätze anzuzeigen, die gemäß einem Suchkriterium oder mehreren Suchkriterien, die von einem User ausgewählt sind, ausgewählt werden.

7. Verfahren wie in Anspruch 6 beansprucht, bei dem der Datenspeicher so konfiguriert ist, dass er unter Verwendung eines Verzeichnisses oder mehrerer Verzeichnisse durchsuchbar ist, die mit einem Kriterium oder mehreren Kriterien, die von einem User ausgewählt sind, übereinstimmen, die über eine User-Schnittstelle des mobilen Telekommunikations-Gerätes eingegeben werden.

8. Vorrichtung, die eine Einrichtung aufweist, die dazu ausgebildet ist, Schritte eines Verfahrens zu implementierten, wie es in einem der Ansprüche 1 bis 7 beansprucht ist.

9. Mobiles Kommunikations-Gerät, das eine Einrichtung aufweist, die dazu ausgebildet ist, Schritte eines Verfahrens zu implementieren, wie es in einem der Ansprüche 1 bis 7 beansprucht ist.

10. Abfolge eines Computerprogramms oder mehrerer Computerprogramme, die dazu ausgebildet sind, eine Anwendung zu implementieren, die durch das Betriebssystem eines mobilen Kommunikations-Gerätes unterstützt wird und Schritte des Verfahrens durchführt, wie es in einem der Ansprüche 1 bis 7 beansprucht ist.

11. Signal, das Befehle umfasst, die durch das Betriebssystem eines mobilen Kommunikations-Gerätes installiert werden können, um eine Anwendung zu erzeugen, die eine Abfolge eines Computerprogramms oder mehrerer Computerprogramme umfasst, die das mobile Kommunikations-Gerät umkonfigurieren, um Schritte des Verfahrens durchzuführen, wie es in einem der Ansprüche 1 bis 7 beansprucht ist.

## Revendications

1. Procédé de traitement de données reçues d'un récepteur numérique de radiodiffusion pour générer un guide électronique de programmes pour le contenu d'une pluralité de canaux de service reçus par ledit récepteur, le procédé comprenant :
i) le traitement d'un sous-canal fournissant des données de guide électronique de programmes, les données comprenant une pluralité de fichiers, chaque fichier comprenant un listage séquentiel d'informations électroniques de programmes pour une pluralité de programmes d'un canal de service individuel qui sont ordonnancés pour une radiodiffusion dans une période de temps prédéterminée, l'étape de traitement étant agencée pour extraire des données de chaque dit fichier indiquant pour chacun de ladite pluralité de programmes au moins un élément informationnel comprenant une caractéristique dudit programme ;
ii) la génération d'un enregistrement de données pour chaque programme individuel, l'enregistrement de données ayant une structure qui inclut au moins un dit élément informationnel comme un indice interrogeable permettant la récupération subséquente de ladite information ;
iii) le stockage de chaque dit enregistrement de données reçu dans un magasin de données, dans lequel ledit magasin de données est configuré pour être interrogeable en utilisant ledit/lesdits un ou plusieurs indices,
**caractérisé en ce que**
à chaque fois qu'un nouveau fichier d'informations de guide électronique de programmes est téléchargé, un contrôle est effectué pour déterminer si un enregistrement de données a déjà été généré contenant les mêmes éléments d'information pour un programme et si un enregistrement existe déjà avec le même élément d'information, l'enregistrement précédent n'est pas effacé et le traitement pour cet enregistrement de données se termine, et le traitement du programme suivant dans le fichier commence.

2. Procédé selon une quelconque revendication précédente, comprenant en outre les étapes de :
réindexation automatique d'informations fournies collectivement pour tous les programmes listés dans chaque fichier reçu, et
génération, pour chaque enregistrement de programme, d'un ou plusieurs élément(s) d'information dérivé(s) desdites informations réindexées comprenant une caractéristique de programme individuel.

3. Procédé selon la revendication 1, comprenant en outre l'étape de collationnement d'enregistrements de données pour une pluralité de différents composants de service pour générer un guide électronique de programmes pour un système de distribution de contenus textuels et/ou audio et/ou vidéo en radiodiffusion numérique.

4. Procédé selon une quelconque revendication précédente, dans lequel ledit procédé est mis en oeuvre par une application supportée par un système d'exploitation d'un dispositif de communications mobile, l'application étant agencée pour recevoir une pluralité de sous-canaux d'un ensemble de circuits de récepteur numérique de radiodiffusion audio, et dans lequel ledit magasin de données utilise une ressource partagée avec d'autres applications tournant sur ledit système d'exploitation.

5. Procédé selon une quelconque revendication précédente, dans lequel lesdites étapes de traitement sont mises en oeuvre par une application DAB reconfigurable à distance agencée pour commander le fonctionnement dudit matériel récepteur DAB de façon à syntoniser sélectivement ledit matériel récepteur DAB sur un multiplex DAB transportant lesdites informations de guide électronique de programmes dans un sous-canal.

6. Procédé selon une quelconque revendication précédente, dans lequel ledit guide électronique de programmes est régénéré pour montrer des enregistrements de données sélectionnés conformément à un ou plusieurs critère(s) de recherche sélectionné(s) par un utilisateur.

7. Procédé selon la revendication 6, dans lequel ledit magasin de données est configuré pour être interrogeable en utilisant un ou plusieurs indice(s) qui se conforment à un ou plusieurs critère(s) sélectionné(s) par un utilisateur entré(s) par l'intermédiaire d'une interface utilisateur du dispositif de communications mobile.

8. Dispositif comprenant un moyen agencé pour mettre en oeuvre des étapes dans un procédé selon l'une quelconque des revendications 1 à 7.

9. Dispositif de communications mobile comprenant un moyen agencé pour mettre en oeuvre des étapes dans un procédé selon l'une quelconque des revendications 1 à 7.

10. Suite d'un ou plusieurs programme(s) informatique(s), agencée pour mettre en oeuvre une application supportée par le système d'exploitation d'un dispositif de communications mobile qui met en oeuvre des étapes dans le procédé selon l'une quelconque des revendications 1 à 7.

11. Signal comprenant des instructions qui sont aptes à être installées par le système d'exploitation d'un dispositif de communications mobile pour générer une application comprenant une suite d'un ou plusieurs programme(s) informatique(s) qui reconfigurent le dispositif de communications mobile pour mettre en oeuvre des étapes dans le procédé selon l'une quelconque des revendications 1 à 7.
